# EUROPEAN PATENT APPLICATION

(11) **EP 4 477 620 A1**
(43) Date of publication of application: **18.12.2024**
(21) Application number: 24175948.9
(22) Date of filing: 15.05.2024
(51) Int. Cl.: C01B 32/20, C01B 33/00, C01G 53/00, C09C 1/46, H01M 4/36, H01M 4/38, H01M 4/587, H01M 10/0525, H01M 4/04, H01M 4/02

(54) **SILICON CARBON COMPOSITE ANODE MATERIALS, PREPARATION METHOD THEREOF, AND SECONDARY BATTERY COMPRISING THE SAME**

(30) Priority: 15.05.2023 KR 20230062573; 29.08.2023 KR 20230113832; 16.10.2023 KR 20230138050; 20.11.2023 KR 20230160195
(71) Applicant: Lemon Energy Inc., Incheon 22825 (KR)
(72) Inventor: Lee, Si Hyun, 22825 Incheon (KR); Lee, Jin Suk, 22825 Incheon (KR); Ahn, Yu Jeong, 22825 Incheon (KR)
(74) Representative: Grünecker Patent- und Rechtsanwälte PartG mbB

(57) **Abstract**

Disclosed are a silicon carbon composite anode material, a method of preparing the same, and a secondary battery including the same. In one embodiment, the anode material includes: nano-silicon particles; a medium coating layer formed on an outer circumferential surface of the nano-silicon particle; and a first coating layer formed on an outer circumferential surface of the medium coating layer, wherein the first coating layer comprises at least one of a hard coating layer and a soft coating layer, the hard coating layer has a higher hardness than the medium coating layer, and the medium coating layer has a higher hardness than the soft coating layer.

## Description

### Cross-Reference to Related Application

This application claims the benefit of Korean Patent Application No. 10-2023-0062573, filed on May 15, 2023, No. 10-2023-0113832, filed on August 29, 2023, No. 10-2023-0138050 filed on October 16, 2023, and No. 10-2023-0160195 filed on November 20, 2023 in the Korean Intellectual Property Office, the entire disclosures of which are incorporated herein by reference.

### Field of the Invention

The present invention relates to a silicon carbon composite anode material, a preparation method thereof, and a secondary battery including the same.

### Description of the Related Art

Currently, generation of greenhouse gas including carbon dioxide and the like and global temperature rise due to the use of fossil energy are of serious concern. Regulation on emission of carbon dioxide is strengthened in countries around the world and introduction of electric vehicles using electricity as a power source is rapidly increasing to replace internal combustion vehicles driven by fossil fuels as a power source.

Secondary batteries are essential parts of electric vehicles to supply electricity thereto and can be repeatedly used through recharging, unlike primary batteries used once and discarded. In addition to electric vehicles, secondary batteries are used in various fields, such as notebook PCs, mobile devices, vertical take-off/landing aircraft used for Urban Air Mobility (UAM), and electric storage systems. In recent years, demand for high-capacity, low-weight and high-efficiency secondary batteries has increased with industrial development, and research and development of such secondary batteries have been actively conducted.

Representative secondary batteries include lead storage batteries, nickel-cadmium batteries, and lithium ion secondary batteries. Among these secondary batteries, the lithium secondary batteries generate electrical energy through intercalation and deintercalation of lithium ions (Li+) during charging/discharging, and have light weight and high energy density to be used in various fields, such as electric vehicles and the like.

The lithium secondary battery includes a cathode; an anode; an electrolyte disposed between the cathode and the anode; and a separator embedded in the electrolyte, in which each of the cathode and the anode includes active materials on a current collector. In the lithium secondary battery, a cathode material includes a lithium transition metal oxide and determines capacity and average voltage of the lithium ion battery as a lithium ion source, and an anode material stores and releases lithium ions emitted from the cathode to allow electric current to flow through an external circuit. The electrolyte acts as a medium for movement of lithium ions between the cathode and the anode inside the secondary battery.

In a typical lithium ion battery, crystalline carbon materials or amorphous carbon materials, such as natural graphite and artificial graphite, are used as the anode materials.

In recent years, silicon (Si) has attracted attention as an anode material instead of carbon. Since graphite used as the anode material in the art can store 1 lithium ion per 6 carbon atoms, whereas silicon (Si) can store 4.4 lithium ions per atom, silicon has advantages of a higher energy density than graphite, a theory capacity of about 4,200 mAh/g, and a very fast discharge rate.

However, a silicon anode material has a problem of low structural stability. In the lithium ion battery, the anode material undergoes anode volume expansion (lithiation) in the course of storing lithium ions. That is, graphite allows a volume expansion of about 10% to 20%, whereas silicon (Si) allows a large volume expansion of 4 to 5 times through reaction of 4.4 lithium ions per silicon to form Li₂₂Si₅ alloys. In particular, the silicon anode material has high crystal brittleness and thus can suffer from pulverization (particle cracking, fracture) and electrical separation from the current collector (Cu electrode plate) during repeated charging/discharging of the lithium ion battery, causing rapid capacity decay and decrease in lifespan of the lithium ion battery. Therefore, there is a need for preparation of an anode material to prevent fracture of the anode material due to such volume expansion of silicon.

In order to prevent fracture of the anode material due to such volume expansion of silicon, there is a need for size optimization of the anode material and for suitable control of the number of silicon particles contained in the anode material.

In addition, the silicon anode material has a problem of rapid deterioration in efficiency due to change in an interface state between the anode material (anode active material), the electrolyte, and the electrode. This is caused by generation of numerous lithium traps when silicon particles are broken due to expansion of the anode material during charging of the secondary battery. More specifically, since a solid electrolyte interphase (SEI) layer can be easily broken by mechanical stress during expansion of the silicon particles, a large amount of the SEI layer is formed on outer circumferential surfaces of the silicon particles when destruction and regeneration of the SEI layer is repeated during charging/discharging of the secondary battery, thereby causing a lithium trap phenomenon and deterioration in electrical contact between the silicon particles through increase in distance between the silicon particles. The SEI layer is a protective film formed on an outer circumferential surface of the active material upon reaction of the electrolyte with the active material of the electrode and has high lithium ion conductivity despite low electron mobility, thereby providing a passage through which lithium ions move between the electrolyte and the anode material. Since graphite allows a small volume change, there is no problem with the SEI layer. However, since silicon expands to the extent of destroying the SEI layer during charging of the secondary battery, lithium is consumed by lithiation of the silicon particles and a gas is generated. As a result, the SEI layer gradually hardens and becomes thicker, preventing lithium ions from having access to the electrode and causing reduction in battery life through restriction of oxidation-reduction reaction of lithium.

Therefore, studies are being actively conducted to prevent fracture of the anode material during charging/discharging of the secondary battery through improvement in structural stability of the silicon anode material.

In addition, there is a need for size optimization of the anode material to prevent fracture of the anode material and reduction in capacity thereof due to expansion of silicon upon charging/discharging, and studies are being conducted to suitably control the number of silicon particles contained in the anode material.

Further, studies are being conducted to prevent fracture of the anode material and reduction in capacity thereof due to volume expansion of silicon upon charging/discharging.

The background technique of the present invention is disclosed in Korean Patent Registration No. 10-2185490 (Publication date: December 2, 2020, Title of Invention: Negative active material comprising silicon composite oxide for non-aqueous electrolyte secondary battery and manufacturing method of the same).

### Summary of the Invention

It is one object of the present invention to provide a silicon carbon composite anode material that includes a coating layer formed on surfaces of nano-silicon particles and having homogeneity and a uniform thickness, can prevent fracture of the coating layer and the anode material due to expansion of nano-silicon particles by intercalation of lithium ions upon charging/discharging, and can minimize reduction in capacity.

It is another object of the present invention to provide a silicon carbon composite anode material that exhibits good adhesion between nano-silicon particles and a coating layer while securing good durability and structural stability.

It is a further object of the present invention to provide a silicon carbon composite anode material that exhibits good properties in terms of electrical properties, high capacity, high output, long lifespan, reversibility, and initial efficiency.

It is yet another object of the present invention to provide a silicon carbon composite anode material that can be contained in high content in fabrication of an anode for secondary batteries.

It is yet another object of the present invention to provide a silicon carbon composite anode material that has good productivity and economic feasibility.

It is yet another object of the present invention to provide a method of preparing the silicon carbon composite anode material.

It is yet another object of the present invention to provide a secondary battery including the silicon carbon composite anode material

One aspect of the present invention relates to a silicon carbon composite anode material.
1. The silicon carbon composite anode material includes: nano-silicon particles; a medium coating layer formed on an outer circumferential surface of the nano-silicon particle; and a first coating layer formed on an outer circumferential surface of the medium coating layer, wherein the first coating layer includes at least one of a hard coating layer and a soft coating layer, the hard coating layer has a higher hardness than the medium coating layer, and the medium coating layer has a higher hardness than the soft coating layer.
2. In embodiment 1, the anode material may further include a silicon carbide (SiC) layer between the nano-silicon particle and the medium coating layer.
3. In embodiments 1 to 2, the nano-silicon particles may have an effective peak at a diffraction angle (2θ) in the range of 26° to 30°, 47° to 50°, 53° to 58°, 68° to 72°, 74° to 78°, and/or 88° to 90° in the X-ray diffraction (XRD) spectrum.
4. In embodiments 1 to 3, the medium coating layer may have a pencil hardness of 2H to 4H, the hard coating layer may have a pencil hardness of greater than 4H to 6H, and the soft coating layer may have a pencil hardness of B to less than 2H, as measured in accordance with ISO 15184.
5. In embodiments 1 to 4, the medium coating layer may have a thickness of 3 nm to 30 nm and a density of greater than 1.5 g/cm³ to 1.8 g/cm³, the hard coating layer may have a thickness of 5 nm to 1,000 nm and a density of greater than 1.8 g/cm³ to 2.8 g/cm³, and the soft coating layer may have a thickness of 5 nm to 500 nm and a density of 1.5 g/cm³ or less.
6. In embodiments 1 to 5, the anode material may have an average particle diameter (d50) of 50 nm to 3 µm, the nano-silicon particles may have an average particle diameter (d50) of 45 nm to 1,500 nm, and the first coating layer may have a thickness of 2 nm to 1,500 nm.
7. In embodiments 1 to 6, the anode material may further include a second coating layer on an outer circumferential surface of the first coating layer and the second coating layer may include a medium coating layer.
8. In embodiments 1 to 7, the anode material may include 25 wt% to 80 wt% of the nano-silicon particles, 1 wt% to 40 wt% of the medium coating layer, and 1 wt% to 60 wt% of the first coating layer.
9. In embodiments 1 to 8, the medium coating layer and the first coating layer may be present in a weight ratio of 1:0.5 to 1:6.
   Another aspect of the present invention relates to a method of preparing the silicon carbon composite anode material.
10. The silicon carbon composite anode material preparing method include: preparing primary dried powder by drying a nano-silicon slurry; preparing a first intermediate material by heat treatment of the primary dried powder using hydrocarbon gas; preparing a mixed slurry including the first intermediate material, a first coating material and a solvent; preparing secondary dried powder by drying the mixed slurry; and preparing a second intermediate material by sintering the secondary dried powder, wherein the first coating material includes at least one of a hard coating material and a soft coating material; the second intermediate material includes nano-silicon particles, a medium coating layer formed on an outer circumferential surface of the nano-silicon particle, and a first coating layer formed on an outer circumferential surface of the medium coating layer; the first coating layer includes at least one of a hard coating layer and a soft coating layer; and the hard coating layer has a higher hardness than the medium coating layer, and the medium coating layer has a higher hardness than the soft coating layer.
11. In embodiment 10, the nano-silicon slurry may be prepared by dispersing silicon powder and a dispersant in a solvent to prepare a dispersion, followed by grinding the dispersion, and the solvent may include at least one of water, ethanol, isopropyl alcohol, and potassium hydroxide (KOH).
12. In embodiments 10 to 11, the step of preparing a first intermediate material may include raising an inner temperature of a chamber receiving the primary dried powder therein to 850°C to 970°C while decreasing an inner pressure of the chamber to less than atmospheric pressure; introducing hydrocarbon gas into the decompressed chamber so as to contact the primary dried powder; and performing heat treatment by gradually raising the inner pressure of the chamber while maintaining the raised temperature of the chamber.
13. In embodiment 12, the step of preparing a first intermediate material may include preparing a first composition including the primary dried powder and graphite; placing the first composition in a chamber, followed by raising the inner temperature of the chamber to 900°C to 1,100°C while decreasing the inner pressure of the chamber to less than atmospheric pressure; introducing hydrocarbon gas and a buffer gas into the decompressed chamber so as to contact the first composition; and performing heat treatment by gradually raising the inner pressure of the chamber while maintaining the raised temperature.
14. In embodiment 13, the second intermediate material may further include a silicon carbide (SiC) layer between the nano-silicon particle and the medium coating layer.
15. In embodiments 10 to 14, the second intermediate material may be prepared by sintering the secondary dried powder at 850°C to 1,050°C.
16. In embodiments 10 to 15, the step of preparing a second intermediate material may include: subjecting the secondary dried powder to primary sintering at 850°C to 1,050°C; and subjecting a first mixture including the secondary dried powder subjected to primary sintering and a second coating material to secondary sintering at 850°C to 1,050°C, wherein the second coating material may include at least one of a hard coating material and a soft coating material.
17. In embodiments 10 to 16, the method may further include forming a second coating layer on an outer circumferential surface of the second intermediate material after preparation of the second intermediate material, wherein the second coating layer includes a medium coating layer and is formed by heat treatment of the second intermediate material in a hydrocarbon gas atmosphere.
   A further aspect of the present invention relates to a secondary battery including the silicon carbon composite anode material.
18. The secondary battery may include a cathode; an anode; and an electrolyte disposed between the cathode and the anode, wherein the anode includes the anode material.

The anode material according to the present invention includes a medium coating layer and a first coating layer formed on nano-silicon particles and having homogeneity and a uniform thickness, can prevent fracture of the coating layer and the anode material due to expansion of nano-silicon particles by intercalation of lithium ions upon charging/discharging while minimizing reduction in capacity, can be present in a high content in production of secondary batteries, and can secure good properties in terms of adhesion between the nano-silicon particle and the coating layer, durability, structural stability, electrical properties, high capacity, high output, long lifespan, reversibility, initial efficiency, productivity, and economic feasibility.

### Brief Description of the Drawings

FIG. 1 is a view of an anode material according to one embodiment of the present invention.
FIG. 2 is a view of an anode material according to another embodiment of the present invention.
FIG. 3 is a graph depicting a pressure variation over time in preparation of a first intermediate material according to one embodiment of the present invention.
FIG. 4 is a graph depicting XRD analysis results of nano-silicon particles of an anode material of Example 1 and nano-silicon particles having a medium coating layer thereon.
FIG. 5 is a graph depicting an XRD analysis result of a first coating layer of the anode material of Example 1.

### Detailed Description of the Invention

Hereinafter, embodiments of the present invention will be described in detail with reference to the accompanying drawings.

In the drawings, portions irrelevant to the description will be omitted for clarity and like components will be denoted by like reference numerals throughout the specification. Although lengths, thicknesses or widths of various components may be exaggerated for understanding in the drawings, the present invention is not limited thereto.

In addition, the terms as used herein are defined by taking functions of the invention into account and can be changed according to the custom or intention of users or operators. Therefore, definition of the terms should be made according to the overall disclosure set forth herein.

### Silicon carbon composite anode material

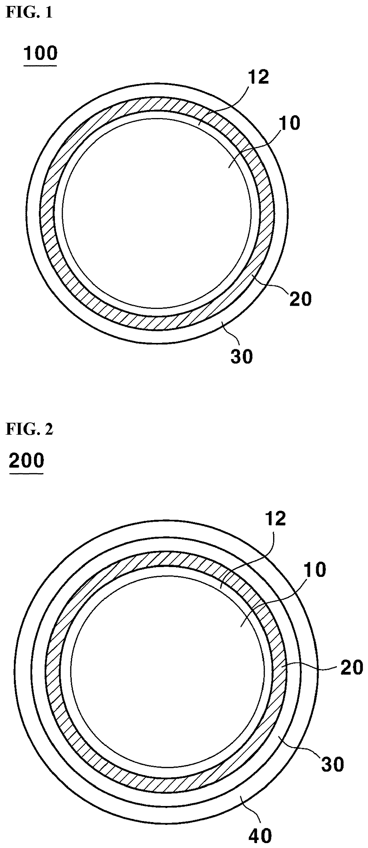

One aspect of the present invention relates to a silicon carbon composite anode material. FIG. 1 is a view of an anode material according to one embodiment of the present invention. Referring to FIG. 1, a silicon carbon composite anode material 100 includes a nano-silicon particle 10; a medium coating layer 20 formed on an outer circumferential surface of the nano-silicon particle 10; and a first coating layer 30 formed on an outer circumferential surface of the medium coating layer 20.

The first coating layer includes at least one of a hard coating layer and a soft coating layer.

The hard coating layer has a higher hardness than the medium coating layer and the medium coating layer has a higher hardness than the soft coating layer.

In one embodiment, the anode material may include 25 wt% to 80 wt% of the nano-silicon particles, 1 wt% to 40 wt% of the medium coating layer, and 1 wt% to 60 wt% of the first coating layer based on the total weight of the anode material.

In one embodiment, the anode material may have a particle density of 1 g/cm³ to 3 g/cm³. Under this condition, the anode material can have good output and is lightweight.

In one embodiment, the anode material may have an average particle diameter of 50 nm to 3 µm. Under this condition of average particle diameter, the anode material can have good properties in terms of high capacity, high output, structural stability and long lifespan, and can prevent fracture of the anode material due to expansion of the nano-silicon particles upon charging/discharging. For example, the anode material may have an average particle diameter of 50 nm to 2.5 µm, 80 nm to 2.5 µm, 100 nm to 2.5 µm, 300 nm to 2.5 µm, 0.5 to 2.5 µm. For example, the anode material may have an average particle diameter of 50 nm, 100 nm, 300 nm, 500 nm, 1 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, 2.6 µm, 2.7 µm, 2.8 µm, 2.9 µm, or 3 µm.

### Nano-silicon particles

The nano-silicon particles serve to secure high capacity and high output of the anode material. In one embodiment, the nano-silicon particles may have a spherical, polyhedral, elliptical or amorphous shape. For example, the nano-silicon particles may have a spherical shape.

Conventionally, in order to prevent fracture of the anode material upon expansion of silicon due to intercalation of lithium ions thereinto, the anode material is prepared by adding flake graphite to silicon, followed by grinding and sintering. However, in preparation of the anode material, oxidation of silicon occurs upon grinding silicon and the flake graphite, thereby causing significant reduction in capacity to less than 1,400 mAh/g.

Conversely, the anode material according to the present invention can prevent fracture of the anode material due to expansion of the nano-silicon particles even without flake graphite by adopting the structure wherein a medium coating layer and a first coating layer (at least one of a hard coating layer and a soft coating layer) are sequentially formed on the outer circumferential surface of the nano-silicon particle, thereby securing long lifespan while realizing a high capacity of 2,000 mAh/g or more.

In one embodiment, the nano-silicon particles may exhibit relatively high crystallinity.

In one embodiment, the nano-silicon particles may have an effective peak at a diffraction angle (2θ) in the range of 26° to 30°, 47° to 50°, 53° to 58°, 68° to 72°, 74° to 78°, and/or 88° to 90° in the X-ray diffraction (XRD) spectrum. Under this condition, the nano-silicon particles can secure good properties in terms of high capacity and high output and can effectively prevent fracture of the nano-silicon particles upon charging/discharging.

For example, the nano-silicon particles may have effective peaks at a diffraction angle (2θ) of 27.5° to 28.5°, 47.5° to 48.5°, 56° to 57°, 68° to 69.5°, 75° to 76°, and 88° to 90° in the X-ray diffraction spectrum, in which the effective peaks may represent the (111), (220), (311), (400), (331) and (442) planes. Under this condition, the nano-silicon particles can secure good properties in terms of high capacity and high output and can effectively prevent fracture of the nano-silicon particles upon charging/discharging.

For example, the nano-silicon particles may have effective peaks at a diffraction angle (2θ) of 26° to 30° at the (111) plane and at a diffraction angle (2θ) of 47° to 50° at the (220) plane in the X-ray diffraction spectrum using CuKα-ray of 1.54 Å to 2.0 Å.

For example, the nano-silicon particles may have effective peaks at a diffraction angle (2θ) of 26° to 30° at the (111) plane and at a diffraction angle (2θ) of 47° to 50° at the (220) plane in the X-ray diffraction spectrum using CuKα-ray of 1.54178 Å under conditions: 0.01° step size and 2θ in the range of 10° to 70°.

In one embodiment, the nano-silicon particles may have an FWHM (full width at half maximum) value of the X-ray diffraction angle (2θ) of 0.40° to 0.80°, preferably 0.52° to 0.68°, or 0.59° to 0.71°, at the (111) and (220) planes in X-ray diffraction analysis using CuKα-rays of 1.54Å to 2.0Å. Under this condition, the anode material can secure high capacity and high output of the nano-silicon particles and can significantly suppress fracture of the silicon particles upon charging/discharging.

In one embodiment, the nano-silicon particles may have an average particle diameter of 45 nm to 1,500 nm. Under this condition, the anode material can secure high capacity and high output of the nano-silicon particles, and does not suffer from cracking or fracture upon expansion of the nano-silicon particles, thereby securing long lifespan. In another embodiment, the nano-silicon particles may have an average particle diameter (d50) of 1,200 nm or less. For example, the nano-silicon particles may have an average particle diameter (d50) of 45 nm to 800 nm, 50 nm to 700 nm, 55 nm to 600 nm, 65 nm to 500 nm, 70 nm to 400 nm, 110 nm to 360 nm, 150 nm to 300 nm, 190 nm to 280 nm, or 200 nm to 220 nm.

In addition, controlling the maximum average particle diameter (Dmax) of the nano-silicon particles is also important. For example, the nano-silicon particles may have a maximum average particle diameter (Dmax) of 380 nm or less, preferably 320 nm to 360 nm, more preferably 300 nm to 340 nm. A lower Dmax indicates a higher viscosity of the nano-silicon slurry, and the viscosity of the nano-silicon slurry may be controlled to 6,500 cP or less (at 25°C).

In one embodiment, the nano-silicon particles may be present in an amount of 25 wt% to 80 wt%, based on the total weight of the anode material. Within this range, the anode material can have good properties in terms of miscibility, durability, high capacity, and high output. For example, the nano-silicon particles may be present in an amount of 25 wt% to 70 wt%. In another embodiment, the nano-silicon particles may be present in an amount of 25 wt% to 75 wt%, 25 wt% to 65 wt%, 25 wt% to 60 wt%, 25 wt% to 50 wt%, 25 wt% to 45 wt%, or 30 to 45 wt%. For example, the nano-silicon particles may be present in an amount of 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79 or 80 wt%.

### Silicon carbide layer

Referring to FIG. 1, the anode material 100 may further include a silicon carbide (SiC) layer 12 between the nano-silicon particle 10 and the medium coating layer 20.

The silicon carbide layer can improve ionic conductivity and electrical conductivity of the nano-silicon particles while securing a stable ion charge/discharge path to provide low contact resistance, thereby preventing fracture of the anode material due to expansion of the nano-silicon particles.

In one embodiment, the silicon carbide (SiC) layer may have a thickness of 1 nm to 15 nm. Under this condition, the anode material can have good properties in terms of durability, ionic conductivity and electrical conductivity, and can have low contact resistance. For example, the anode material may have a thickness of 1 nm to 12 nm, 1 nm to 10 nm, 2 nm to 10 nm, 3 nm to 10 nm, 3 nm to 8 nm, or 3 nm to 5 nm.

In one embodiment, the silicon carbide layer may have a higher hardness than the medium coating layer and the hard coating layer. Under this condition, the silicon carbide layer can exhibit good electrical conductivity and can prevent fracture of the anode material due to expansion of the nano-silicon particles.

For example, the silicon carbide layer may have a pencil hardness of 7H or higher, as measured in accordance with ISO 15184. For example, the silicon carbide layer may have a pencil hardness of 8H or higher, 10H or higher, 8H to 13H, or 8H to 10H.

In one embodiment, the silicon carbide layer may be present in an amount of 1 wt% to 25 wt%, based on the total weight of the anode material. Under this condition, the silicon carbide layer can secure good properties in terms of durability, ionic conductivity and electrical conductivity, and can have low contact resistance. For example, the silicon carbide layer may be present in an amount of 1 wt% to 20 wt%, 1 wt% to 15 wt%, 1 wt% to 10 wt%, 1 wt% to 8 wt%, 2 wt% to 8 wt%, or 2 wt% to 5 wt%, based on the total weight of the anode material. For example, the silicon carbide layer may be present in an amount of 1, 2, 3, 4, 5, 6, 7, 8, 9, 10, 11, 12, 13, 14, 15, 16, 17, 18, 19, 20, 21, 22, 23, 24 or 25 wt% based on the total weight of the anode material.

In one embodiment, the silicon carbide layer and the medium coating layer may have a thickness ratio of 1:1 to 1:4. Under this condition, the anode material can have good properties in terms of electrical conductivity and durability without suffering from fracture due to expansion of the nano-silicon particles. For example, the silicon carbide layer and the medium coating layer may be present in a weight ratio of 1:1.5 to 1:3.

### Medium coating layer

In one embodiment, the medium coating layer may be formed through heat treatment of hydrocarbon gas and carbon black. For example, the hydrocarbon gas may include at least one of methane (CH₄), ethane (C₂H₆), propane (C₃H₈), butane (C₄H₁₀), and pentane (C₅H₁₂).

In one embodiment, the medium coating layer may have a pencil hardness of 2H to 4H, as measured in accordance with ISO 15184. Under this condition, the medium coating layer can prevent fracture of the anode material due to expansion of the nano-silicon particles to secure long lifespan of the anode material. For example, the medium coating layer may have a pencil hardness of 2H to 3H.

In one embodiment, the medium coating layer may have a thickness of 3 nm to 30 nm. Under this condition, the medium coating layer can prevent damage to or fracture of the anode material due to expansion of the nano-silicon particles while securing high output and good electrical conductivity. For example, the medium coating layer may have a thickness of 3 nm to 25 nm, 3 nm to 15 nm, 5 nm to 15 nm, 6 nm to 15 nm, or 10 nm to 15 nm.

In one embodiment, the medium coating layer may have a density of greater than 1.5 g/cm³ to 1.7 g/cm³. Under this condition, the medium coating layer can exhibit good structural stability and is lightweight. For example, the medium coating layer may have a density of greater than 1.5 g/cm³ to 1.7 g/cm³.

In one embodiment, the medium coating layer may have a specific surface area (BET) of 100 m²/g to 200 m²/g. Under this condition, the anode material can have good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 µΩ·m to 40 µΩ·m. Under this condition, the anode material can exhibit good electrical conductivity.

In one embodiment, the medium coating layer may be present in an amount of 1 wt% to 40 wt% based on the total weight of the anode material. Within this range, the medium coating layer has good electrical conductivity, can prevent cracking and fracture of the anode material due to expansion of the nano-silicon particles, and can minimize reduction in capacity to secure long lifespan. For example, the medium coating layer may be present in an amount of 1 wt% to 35 wt%, 1 wt% to 30 wt%, 1 wt% to 25 wt%, 1 wt% to 20 wt%, 1 wt% to 15 wt%, 1 wt% to 10 wt%, 1 wt% to 8 wt%, 2 wt% to 8 wt%, or 2 wt% to 5 wt%, based on the total weight of the anode material. For example, the medium coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%, based on the total weight of the anode material.

### First coating layer

The first coating layer includes at least one of a hard coating layer and a soft coating layer.

In one embodiment, the first coating layer may have a thickness of 2 nm to 1,500 nm. Under this condition, the first coating layer can have high hardness and good mechanical strength to prevent damage to or fracture of the medium coating layer (or the anode material) even upon expansion of the nano-silicon particles. For example, the first coating layer may have a thickness of 2 nm to 1,200 nm, 3 nm to 1,000 nm, 5 nm to 800 nm, 5 nm to 500 nm, 5 nm to 300 nm, 5 nm to 200 nm, 5 nm to 100 nm, 5 nm to 80 nm, 5 nm to 30 nm, 10 nm to 30 nm, or 10 nm to 25 nm.

In one embodiment, the first coating layer may be present in an amount of 1 wt% to 60 wt% based on the total weight of the anode material. Within this range, the first coating layer can secure high output and good electrical conductivity and can prevent cracking and fracture of the medium coating layer (or the anode material) upon expansion of the nano-silicon particles, and can minimize reduction in capacity to secure long lifespan. For example, the first coating layer may be present in an amount of 1 wt% to 50 wt%, 1 wt% to 45 wt%, 1 wt% to 40 wt%, 1 wt% to 30 wt%, 1 wt% to 25 wt%, 1 wt% to 20 wt%, 2 wt% to 20 wt%, 2 wt% to 15 wt%, 2 wt% to 10 wt%, or 3 wt% to 10 wt%, based on the total weight of the anode material.

For example, the first coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 or 60 wt%, based on the total weight of the anode material.

### Hard coating layer

The hard coating layer may be formed by sintering a hard coating material described below. With the hard coating layer, the anode material can have good strength and durability to prevent fracture of the anode material upon expansion of the nano-silicon particles, can exhibit good electrical conductivity and long lifespan, and can prevent reduction in capacity.

In one embodiment, the hard coating layer may have relatively high crystallinity. Under this condition, the hard coating layer can exhibit good durability and strength.

In one embodiment, the hard coating layer may have higher crystallinity than the medium coating layer and the soft coating layer. The medium coating layer may have higher crystallinity than the soft coating layer. Here, crystallinity can be confirmed through typical XRD (X-ray diffraction) analysis. Under this condition, the anode material can exhibit good properties in terms of electrical conductivity, strength and high output without suffering from fracture and cracking of the anode material due to expansion of the nano-silicon particles.

In one embodiment, the hard coating layer may have a thickness of 5 nm to 1,000 nm. Under this condition, the hard coating layer can have high hardness and good mechanical strength to prevent damage to or fracture of the anode material even upon expansion of the nano-silicon particles. For example, the hard coating layer may have a thickness of 5 nm to 45 nm, 5 nm to 40 nm, 5 nm to 30 nm, 5 nm to 20 nm, 5 nm to 15 nm, or 5 nm to 10 nm.

In one embodiment, the hard coating layer may have a density of greater than 1.8 g/cm³ to 2.8 g/cm³. Under this condition, the hard coating layer can have good structural stability and is lightweight. For example, the hard coating layer may have a density of 1.9 g/cm³ to 2.5 g/cm³.

In one embodiment, the hard coating layer may have a specific surface area (BET) of 100 m²/g or less. Under this condition, the hard coating layer can exhibit good structural stability.

In one embodiment, the hard coating layer may have a purity (impurity content) of 100 ppm or less. Under this condition, the anode material can exhibit good electrical conductivity.

In one embodiment, the hard coating layer may have a resistivity of 3 µΩ·m to 5 µΩ·m. Under this condition, the anode material can exhibit good electrical conductivity.

In one embodiment, the hard coating layer may have a pencil hardness of greater than 4H to 6H, as measured in accordance with ISO 15184. Under this condition, the hard coating layers can have good durability and strength, and it is possible to effectively prevent damage to or fracture of the medium coating layer (or the anode material) upon expansion of the nano-silicon particles due to intercalation of lithium ions thereinto. For example, the hard coating layers may have a pencil hardness of 4.5H to 6H.

In one embodiment, the hard coating layer may be present in an amount of 1 wt% to 35 wt%, based on the total weight of the anode material. Within this range, the anode material can exhibit good properties in terms of durability, structural stability and electrical properties. For example, the hard coating layers may be present in an amount of 1 wt% to 30 wt%, 1 wt% to 25 wt%, 1 wt% to 20 wt%, 2 wt% to 20 wt%, 2 wt% to 15 wt%, 2 wt% to 10 wt%, or 3 wt% to 10 wt%, based on the total weight of the anode material. For example, the hard coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34 or 35 wt%, based on the total weight of the anode material.

### Soft coating layer

In one embodiment, the soft coating layer may be formed by sintering a soft coating material. In one embodiment, the soft coating material may include at least one of pitch, coke and carbon precursors formed of other organic materials. For example, the pitch may include at least one of pyrolysis fuel oil pitch and coal tar pitch.

In one embodiment, the soft coating layer may have a pencil hardness of B to less than 2H, as measured in accordance with ISO 15184. Under this condition, the soft coating layer can very effectively relieve expansion of the nano-silicon particles to prevent fracture of the anode material due to expansion of the nano-silicon particles, thereby securing long lifespan. For example, the soft coating layer may have a pencil hardness of B to 1H.

In one embodiment, the soft coating layer may have a density of 1.5 g/cm³ or less. Under this condition, the soft coating layer can have good structural stability and is lightweight. For example, the soft coating layer may have a density of 0.3 g/cm³ to 1.5 g/cm³.

In one embodiment, the soft coating layer may have a specific surface area (BET) of 300 m²/g or more. Under this condition, the soft coating layer can have good structural stability. For example, the soft coating layer may have a specific surface area (BET) of 300 m²/g to 2,500 m²/g.

In one embodiment, the soft coating layer may have a purity (impurity content) of 1,000 ppm or more. Under this condition, the anode material can exhibit good electrical conductivity. For example, the soft coating layer may have a purity (impurity content) of 1,000 ppm to 5,000 ppm.

In one embodiment, the soft coating layer may have a resistivity of 50 µΩ·m or more. Under this condition, the anode material can exhibit good electrical conductivity. For example, the soft coating layer may have a resistivity of 50 µΩ·m to 300 µΩ·m.

In one embodiment, the soft coating layer may have a thickness of 5 nm to 500 nm. Under this condition, the soft coating layer can have high hardness and good mechanical strength to prevent damage to or fracture of the anode material even upon expansion of the nano-silicon particles. For example, the soft coating layer may have a thickness of 5 nm to 45 nm, 5 nm to 40 nm, 5 nm to 30 nm, 5 nm to 20 nm, 5 nm to 15 nm, or 5 nm to 10 nm.

In one embodiment, the soft coating layer may be present in an amount of 1 wt% to 30 wt%, based on the total weight of the anode material. Within this range, the soft coating layer can secure good properties of the anode material in terms of durability, structural stability and electrical properties. For example, the soft coating layer may be present in an amount of 1 wt% to 25 wt%, 1 wt% to 20 wt%, 2 wt% to 20 wt%, 2 wt% to 15 wt%, 2 wt% to 10 wt%, 3 wt% to 10 wt%, based on the total weight of the anode material. For example, the soft coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29 or 30 wt%, based on the total weight of the anode material.

In one embodiment, the first coating layer may include the hard coating layer and the soft coating layer in a weight ratio of 1:0.5 to 1:3. Within this range of weight ratio, the anode material can exhibit good properties in terms of strength, high output and long lifespan. For example, the first coating layer may include the hard coating layer and the soft coating layer in a weight ratio of 1:1 to 1:3, 1:1.5 to 1:3, or 1:2 to 1:3.

In one embodiment, the anode material may include the medium coating layer and the first coating layer in a weight ratio of 1:0.5 to 1:6. Within this range of weight ratio, the anode material does not suffer from cracking and fracture even upon expansion of the nano-silicon particles and can secure high output and long lifespan. For example, the anode material may include the medium coating layer and the first coating layer in a weight ratio of 1:0.8 to 1:5, 1:1 to 1:4, 1:1 to 1:3 or 1:1.5 to 1:3.

### Second coating layer

FIG. 2 is a view of an anode material according to another embodiment of the present invention. Referring to FIG. 2, the anode material 200 may further include a second coating layer 40 on an outer circumferential surface of the first coating layer 30.

In one embodiment, the second coating layer includes a medium coating layer. The medium coating layer may be formed by heat treatment of at least one of hydrocarbon gas and carbon black. For example, the hydrocarbon gas may include at least one of methane (CH₄), ethane (C₂H₆), propane (C₃H₈), butane (C₄H₁₀), and pentane (C₅H₁₂).

In one embodiment, the medium coating layer the medium coating layer may be a non-crystalline or crystalline layer. Under this condition, the anode material can exhibit high strength and durability.

In one embodiment, the medium coating layer may have a pencil hardness of 2H to 4H, as measured in accordance with ISO 15184. Under this condition, the medium coating layer can prevent fracture of the anode material due to expansion of the nano-silicon particles to secure long lifespan of the anode material. For example, the medium coating layer may have a pencil hardness of 2H to 3H.

In one embodiment, the medium coating layer may have a thickness of 3 nm to 100 nm. Under this condition, the medium coating layer can prevent cracking or fracture of the anode material due to expansion of the nano-silicon particles while securing high output and good electrical conductivity. For example, the medium coating layer may have a thickness of 3 nm to 50 nm, 3 nm to 30 nm, 3 nm to 15 nm, 5 nm to 15 nm, 6 nm to 15 nm, or 10 nm to 15 nm.

In one embodiment, the medium coating layer may have a density of greater than 1.5 g/cm³ to 1.7 g/cm³. Under this condition, the medium coating layer can exhibit good structural stability and is lightweight. For example, the medium coating layer may have a density of greater than 1.5 g/cm³ to 1.7 g/cm³.

In one embodiment, the medium coating layer may have a specific surface area (BET) of 100 m²/g to 200 m²/g. Under this condition, the anode material can have good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 µΩ·m to 40 µΩ·m. Under this condition, the anode material can exhibit good electrical conductivity.

In one embodiment, the second coating layer may be present in an amount of 1 wt% to 40 wt%, based on the total weight of the anode material. Within this range, the medium coating layer has good electrical conductivity, can prevent cracking and fracture of the anode material due to expansion of the nano-silicon particles, and can minimize reduction in capacity to secure long lifespan. For example, the medium coating layer may be present in an amount of 1 wt% to 35 wt%, 1 wt% to 30 wt%, 1 wt% to 25 wt%, 1 wt% to 20 wt%, 1 wt% to 15 wt%, 1 wt% to 10 wt%, 1 wt% to 8 wt%, 2 wt% to 8 wt%, or 2 to 5 wt%, based on the total weight of the anode material. For example, the second coating layer may be present in an amount of 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40 wt%, based on the total weight of the anode material.

In one embodiment, the anode material may include the medium coating layer, the first coating layer and the second coating layer in a weight ratio of 1:0.5 to 6:0.1 to 4. Within this range of weight ratio, the anode material does not suffer from cracking and fracture even upon expansion of the nano-silicon particles while securing high output and long lifespan. For example, the anode material may include the medium coating layer, the first coating layer and the second coating layer in a weight ratio of 1:0.8 to 5:0.3 to 4, 1:1 to 4:0.5 to 3.5, 1:1 to 3:1 to 2.5 or 1:1.5 to 3:1 to 2.

In another embodiment, the anode material may include the medium coating layer, the silicon carbide layer, the first coating layer and the second coating layer in a weight ratio of 1:0.1 to 3:0.5 to 6:0.1 to 4. Within this range of weight ratio, the anode material does not suffer from cracking and fracture even upon expansion of the nano-silicon particles while securing high output and long lifespan. For example, the anode material may include the medium coating layer, the silicon carbide layer, the first coating layer and the second coating layer in a weight ratio of 1:0.1 to 2:0.8 to 5:0.3 to 4, 1:0.3 to 1.5:1 to 4:0.5 to 3.5, 1:0.5 to 1.2:1 to 3:1 to 2.5 or 1:0.6 to 1:1.5 to 3:1 to 2.

### Method of preparing silicon carbon composite anode material

Another aspect of the present invention relates to a method of preparing the silicon carbon composite anode material. In one embodiment, the anode material preparation method may include: a primary dried powder preparation step (S10); a first intermediate material preparation step (S20); a mixed slurry preparation step (S30); a secondary dried powder preparation step (S40); and a second intermediate material preparation step (S50). More specifically, the silicon carbon composite anode material preparation method includes: preparing primary dried powder by drying a nano-silicon slurry (S10); preparing a first intermediate material by heat treatment of the primary dried powder using hydrocarbon gas (S20); preparing a mixed slurry including the first intermediate material, a first coating material and a solvent (S30); preparing secondary dried powder by drying the mixed slurry (S40); and preparing a second intermediate material by sintering the secondary dried powder (S50).

The first coating material includes at least one of a hard coating material and a soft coating material, and the second intermediate material includes nano-silicon particles, a medium coating layer formed on an outer circumferential surface of the nano-silicon particle and a first coating layer formed on an outer circumferential surface of the medium coating layer.

The first coating layer includes at least one of a hard coating layer and a soft coating layer. The first coating layer has a higher hardness than the medium coating layer, and the medium coating layer has a higher hardness than the soft coating layer.

In one embodiment, the anode material may include 25 wt% to 80 wt% of the nano-silicon particles, 1 wt% to 40 wt% of the medium coating layer, and 1 wt% to 60 wt% of the first coating layer.

### (S10) Primary dried powder preparation step

In this step, a nano-silicon slurry is dried to prepare primary dried powder.

In one embodiment, the nano-silicon slurry may include nano-silicon particles. In one embodiment, the nano-silicon slurry may be prepared by dispersing silicon powder and a dispersant in a solvent to prepare a dispersion, followed by grinding the dispersion.

In one embodiment, the solvent may include at least one of water, ethanol, isopropyl alcohol, and potassium hydroxide (KOH). The solvent can secure good miscibility and dispersibility of the nano-silicon slurry without oxidation of the silicon powder.

In one embodiment, the dispersant may include at least one of poly(vinyl pyrrolidone), nitrile butadiene rubber, hydrogenated nitrile butadiene rubber, stearic acid, palmitic acid, oleic acid, and lauric acid. In another example, the dispersant may include at least one of stearic acid, pyrolysis fuel oil pitch, coal tar pitch, coal tar, glucose, sucrose, polyimide, polyacrylic acid (PAA), and polyvinyl alcohol (PVA). The dispersant can secure good dispersion of the silicon powder while allowing easy preparation of the nano-silicon slurry including the nano-silicon particles. For example, the dispersant may include stearic acid. For example, the dispersant may be a mixture of stearic acid and N-methyl pyrrolidone (NMP).

In one embodiment, the nano-silicon slurry may include 100 parts by weight of the silicon powder, 5 to 1,500 parts by weight of the solvent, and 0.1 to 30 parts by weight of the dispersant. Under this condition, the nano-silicon slurry can secure good miscibility and dispersion of the nano-silicon particles and can be easily prepared. For example, the nano-silicon slurry may include 100 parts by weight of the silicon powder, 800 to 1,000 parts by weight of the first solvent, and 0.5 to 25 parts by weight of the dispersant.

For example, the nano-silicon slurry may be prepared by adding the dispersant to the solvent in amounts as above, mixing the dispersant with the solvent, and mixing the silicon powder with the mixture to prepare a dispersion, followed by grinding the dispersion.

In one embodiment, grinding may be performed by milling. In one embodiment, milling may be performed using a bead-mill, a ball-mill, a high energy ball-mill, a planetary mill, a stirred ball-mill, a vibration mill, or the like.

For example, the ball-mill may be formed of a chemically inert material that does not react with the silicon powder and other organic components. For example, the ball-mill may include zirconia (ZrO₂). In one embodiment, the ball mill may have an average particle diameter of 0.1 mm to 1 mm. Under this condition, the nano-silicon particles can be easily prepared.

For example, a weight ratio of zirconia beads to the silicon powder (zirconia beads/silicon powder, ball per ratio) may range from 1/3.5 to 1/10. In addition, upon dispersion of the dispersant, a rotor of the grinding machine may be rotated at 2,200 rpm to 2,600 rpm.

In one embodiment, the silicon powder may have an average particle diameter (d50) of 0.2 µm to 3.5 µm. Under this condition, the silicon powder can be easily mixed and ground, and the nano-silicon particles having a desired average particle diameter can be easily prepared. For example, the silicon powder may have an average particle diameter (d50) of 0.2 µm to 3 µm. In another example, the silicon powder may have an average particle diameter (d50) of 0.3 µm to 1.8 µm.

In one embodiment, the silicon powder may have a maximum particle diameter (Dmax) of 10 µm or less. Under this condition, the nano-silicon particles having a desired average particle diameter can be easily prepared.

In one embodiment, the silicon powder may be present in an amount of 6.5 wt% to 17.8 wt% in the nano-silicon slurry. Under this condition, the nano-silicon slurry can secure good miscibility and workability.

In one embodiment, the nano-silicon slurry may have a viscosity of 2,000 cP to 6,500 cP (at 25°C). Under this condition, the nano-silicon slurry can secure good miscibility and dispersion, and the number of nano-silicon particles packed in the hollow portion can be easily controlled.

In one embodiment, the nano-silicon particles may have an average particle diameter of 45 nm to 1,500 nm. In another embodiment, the nano-silicon particles may have an average particle diameter (d50) of 1,200 nm or less, 45 nm to 800 nm, 50 nm to 700 nm, 55 nm to 600 nm, 65 nm to 500 nm, 70 nm to 400 nm, 110 nm to 360 nm, 150 nm to 300 nm, 190 nm to 280 nm, or 200 nm to 220 nm. In addition, controlling the maximum average particle diameter (Dmax) of the nano-silicon particles is very important. For example, the nano-silicon particles may have a maximum particle diameter (Dmax) of 380 nm or less, preferably 320 nm to 360 nm. More preferably, the nano-silicon particles have a maximum particle diameter (Dmax) of 300 nm to 340 nm. A lower Dmax value can cause increase in viscosity of the nano-silicon slurry and the viscosity of the nano-silicon slurry may be adjusted to 6,500 cP or less (at 25°C).

In one embodiment, the nano-silicon particles may have a spherical, polyhedral, elliptical or amorphous shape. For example, the nano-silicon particles may have a spherical shape.

The particle size of the anode material can be easily adjusted by drying the nano-silicon slurry. For example, drying may be performed using a spray dryer or the like. For example, spray drying may be performed using a spray dryer provided with a single-fluid nozzle, a two-fluid nozzle, or a four-fluid nozzle.

In one embodiment, the primary dried powder may have a spherical, polyhedral or elliptical shape. For example, the primary dried powder may have a spherical shape.

In one embodiment, the primary dried powder may have an average particle diameter (or size) of 0.1 µm to 15 µm. Under this condition, the primary dried powder can secure good miscibility and formability.

In one embodiment, as prepared by spray-drying the mixed slurry using a single-fluid nozzle at an air flow rate of 650 sccm to 850 sccm with the spray dryer set to have an outlet temperature of 70°C to 130°C, the primary dried powder may have an average particle diameter of 7 µm to 14 µm. In another embodiment, as prepared by spray drying the mixed slurry using a four-fluid nozzle, the primary dried powder may have an average particle diameter of 0.1 µm to 8 µm.

### (S20) First intermediate material preparation step

In this step, a first intermediate material is prepared by heat treatment of the primary dried powder using hydrocarbon gas.

In one embodiment, the first intermediate material preparation step may include: raising an inner temperature of a chamber receiving the primary dried powder therein to 850°C to 970°C while decreasing the inner pressure of the chamber to less than atmospheric pressure; introducing hydrocarbon gas into the decompressed chamber so as to contact the primary dried powder; and performing heat treatment by gradually raising the inner pressure of the chamber while maintaining the raised temperature.

The first intermediate material may include a medium coating layer formed on an outer circumferential surface of the primary dried powder. For example, heat treatment may be performed at 850°C to 970°C. Under this condition, the medium coating layer can be easily formed. For example, heat treatment may be performed at 870°C to 960°C, 890°C to 960°C, 900°C to 950°C, or 900°C to 935°C.

In one embodiment, heat treatment may be performed in a vacuum. Under this condition, the hydrocarbon gas can be evenly diffused between the nano-silicon particles, thereby forming a uniform medium coating layer through heat treatment. For example, heat treatment may be performed in a vacuum of 10⁻¹ torr to 10⁻⁶ torr.

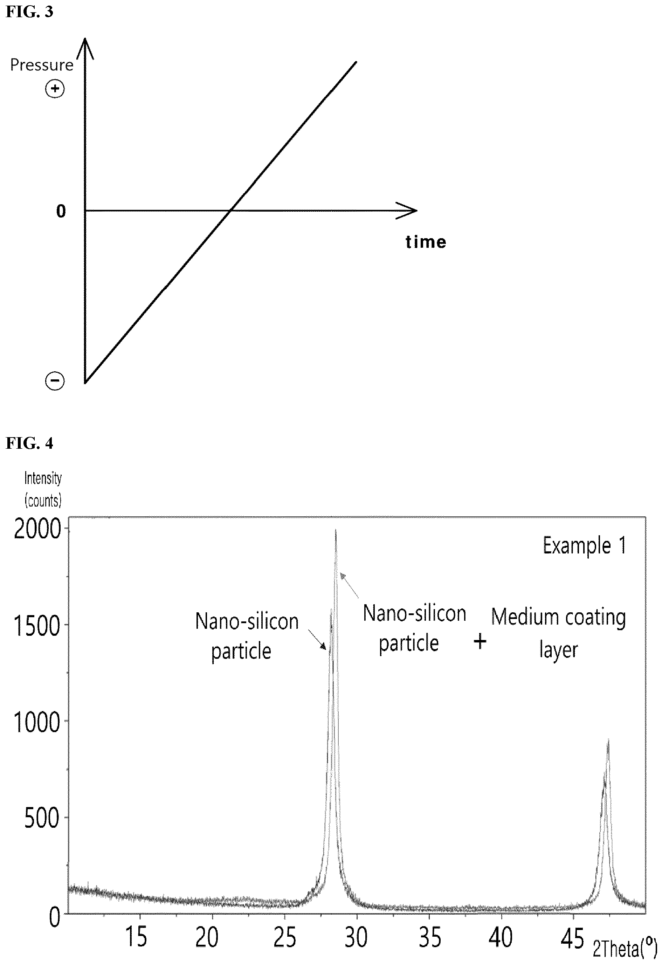

FIG. 3 is a graph depicting a pressure variation over time in preparation of a first intermediate material according to one embodiment of the present invention. Referring to FIG. 3, the first intermediate material may be formed by decompressing a chamber receiving the primary dried powder therein to introduce hydrocarbon gas into the chamber, and gradually raising the inner pressure of the chamber upon pyrolysis of the hydrocarbon gas to form a medium coating layer on the outer circumferential surface of the primary dried powder (or the nano-silicon particle). Under this condition, a medium coating layer having a uniform thickness and good homogeneity can be formed.

In one embodiment, the first intermediate material preparation step may include: raising the inner temperature of the chamber receiving the primary dried powder therein to 850°C to 970°C while decreasing the inner pressure of the chamber to 10⁻¹ torr to 10⁻⁶ torr; introducing hydrocarbon gas into the decompressed chamber so as to contact the primary dried powder; and gradually raising the inner pressure of the chamber while maintaining the raised temperature of the chamber to form the first intermediate material on the outer circumferential surface of the primary dried powder through pyrolysis of the hydrocarbon gas.

Upon decompression of the chamber under the above condition, the hydrocarbon gas can easily spread between the nano-silicon particles (primary dried powder) in the chamber, whereby the medium coating layer can be uniformly formed. In particular, the hydrocarbon gas can easily spread between multiple nano-silicon particles, thereby forming the medium coating layer having good homogeneity and a uniform thickness.

In addition, upon raising the inner pressure of the chamber under this condition, the medium coating layer having a uniform thickness and good homogeneity can be formed on the outer circumferential surface of the nano-silicon powder (primary dried powder).

Here, the inner pressure of the chamber may be gradually raised from a vacuum, as shown in FIG. 3. For example, the first intermediate material may be prepared by gradually raising the inner pressure of the chamber to 10¹ torr to 10⁵ torr.

The medium coating layer may be formed by heat treatment of at least one of hydrocarbon gas and carbon black. For example, the hydrocarbon gas may include at least one of methane (CH₄), ethane (C₂H₆), propane (C₃H₈), butane (C₄H₁₀), and pentane (C₅H₁₂).

In one embodiment, the medium coating layer may be a non-crystalline or crystalline layer. Under this condition, the anode material can exhibit high strength and durability.

In one embodiment, the medium coating layer may have a pencil hardness of 2H to 4H, as measured in accordance with ISO 15184. Under this condition, the medium coating layer can prevent cracking or fracture of the anode material due to expansion of the nano-silicon particles to secure long lifespan of the anode material. For example, the medium coating layer may have a pencil hardness of 2H to 3H.

In one embodiment, the medium coating layer may have a thickness of 3 nm to 50 nm. Under this condition, the medium coating layer can prevent cracking or fracture of the anode material due to expansion of the nano-silicon particles while securing good properties in terms of high output and electrical conductivity. For example, the medium coating layer may have a thickness of 3 nm to 15 nm, 5 nm to 15 nm, 6 nm to 15 nm, or 10 nm to 15 nm.

In one embodiment, the medium coating layer may have a density of greater than 1.5 g/cm³ to 1.7 g/cm³. Under this condition, the medium coating layer can exhibit good structural stability and is lightweight. For example, the medium coating layer may have a density of greater than 1.5 g/cm³ to 1.7 g/cm³.

In one embodiment, the medium coating layer may have a specific surface area (BET) of 100 m²/g to 200 m²/g. Under this condition, the anode material can have good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 µΩ·m to 40 µΩ·m. Under this condition, the anode material can exhibit good electrical conductivity.

In one embodiment, in the first intermediate material preparation step, a silicon carbide (SiC) layer and the medium coating layer may be sequentially formed on the outer circumferential surface of the primary dried powder.

The silicon carbide layer can improve ionic conductivity and electrical conductivity of the nano-silicon particles while securing a stable ion charge/discharge path to provide low contact resistance, thereby preventing fracture of the anode material due to expansion of the nano-silicon particles.

In one embodiment, the silicon carbide (SiC) layer may have a thickness of 1 nm to 15 nm. Under this condition, the anode material can have good properties in terms of durability, ionic conductivity and electrical conductivity, and can have low contact resistance. For example, the silicon carbide (SiC) layer may have a thickness of 1 nm to 12 nm, 1 nm to 10 nm, 2 nm to 10 nm, 3 nm to 10 nm, 3 nm to 8 nm, or 3 nm to 5 nm.

In one embodiment, the silicon carbide layer may have a higher hardness than the medium coating layer and the hard coating layer. Under this condition, the silicon carbide layer can exhibit good electrical conductivity and can prevent fracture of the anode material due to expansion of the nano-silicon particles.

For example, the silicon carbide layer may have a pencil hardness of 7H or higher, as measured in accordance with ISO 15184. For example, the silicon carbide layer may have a pencil hardness of 8H or higher, 10H or higher, 8H to 13H, or 8H to 10H.

In one embodiment, the silicon carbide layer may be present in an amount of 1 wt% to 25 wt%, based on the total weight of the anode material. Under this condition, the silicon carbide layer can secure good properties in terms of durability, ionic conductivity and electrical conductivity, and can have low contact resistance. For example, the silicon carbide layer may be present in an amount of 1 wt% to 20 wt%, 1 wt% to 15 wt%, 1 wt% to 10 wt%, 1 wt% to 8 wt%, 2 wt% to 8 wt%, or 2 wt% to 5 wt%, based on the total weight of the anode material. For example, the silicon carbide layer may be present in an amount of 1, 2, 3, 4, 5, 6, 7, 8, 9, 10, 11, 12, 13, 14, 15, 16, 17, 18, 19, 20, 21, 22, 23, 24 or 25 wt% based on the total weight of the anode material.

In one embodiment, the silicon carbide layer and the medium coating layer may have a thickness ratio of 1:1 to 1:4. Under this condition, the anode material can have good properties in terms of electrical conductivity and durability without suffering from fracture due to expansion of the nano-silicon particles. For example, the silicon carbide layer and the medium coating layer may be present in a weight ratio of 1:1.5 to 1:3.

For example, the first intermediate material preparation step may include: preparing a first composition including the primary dried powder and graphite (S21); placing the first composition in a chamber, followed by raising the inner temperature of the chamber to 900°C to 1,100°C while decreasing an inner pressure of the chamber to less than atmospheric pressure (S22); introducing hydrocarbon gas and a buffer gas into the decompressed chamber so as to contact the first composition (S23); and performing heat treatment by gradually raising the inner pressure of the chamber while maintaining the raised temperature (S24). Under this condition, the medium coating layer and the silicon carbide (SiC) layer can be sequentially formed on an outer circumferential surface of the primary dried powder.

In one embodiment, graphite may be typical graphite. The graphite may be flake graphite, spherical graphite, polygonal graphite, or amorphous graphite.

In one embodiment, the graphite may have an average particle diameter of 10 nm to 3 µm. Under this condition, the graphite can secure good miscibility and dispersion.

In one embodiment, in step (S21), the first composition may include 100 parts by weight of the nano-silicon particles and 0.1 to 20 parts by weight of the graphite. Under this condition, the silicon carbide layer can be easily formed. For example, the graphite may be present in an amount of 0.1 to 15 parts by weight, 0.1 to 10 parts by weight, or 0.1 to 5 parts by weight relative to 100 parts by weight of the nano-silicon particles.

In step (S22), the first composition is placed in the chamber and the inner temperature of the chamber is raised to 900°C to 1100°C while decreasing the inner pressure of the chamber to less than atmospheric pressure.

The inner temperature of the chamber may be raised to 900°C to 1,100°C. Under this condition, the silicon carbide layer can be easily formed, can exhibit good properties in terms of durability, ionic conductivity and electrical conductivity, and can have low contact resistance.

In one embodiment, heat treatment may be performed in a vacuum. Under this condition, the hydrocarbon gas can be evenly diffused between the nano-silicon particles, and the silicon carbide layer and the medium coating layer can be formed on the outer circumferential surface of the nano-silicon particle upon heat treatment. For example, heat treatment may be performed in a vacuum of 10⁻¹ torr to 10⁻⁶ torr.

In step (S23), the hydrocarbon gas and the buffer gas may be introduced into the decompressed chamber having a raised temperature so as to contact the first composition.

In one embodiment, the buffer gas may include nitrogen (N₂) gas. When the buffer gas is used, the buffer gas and the hydrocarbon gas can easily spread between the nano-silicon particles placed in the decompressed chamber, whereby the silicon carbide layer and the medium coating layer can be homogeneously formed. In particular, the hydrocarbon gas can easily spread between multiple nano-silicon particles, whereby the medium coating layer can be formed to have good homogeneity and a uniform thickness.

In step (S24), heat treatment may be performed by gradually raising the inner pressure of the chamber while maintaining the raised temperature.

For example, as shown in FIG. 3, the first intermediate material may be prepared by raising the inner temperature of the chamber with the first composition placed in the chamber while decreasing the inner pressure of the chamber to introduce the hydrocarbon gas and the buffer gas into the chamber, followed by sequentially forming the silicon carbide layer and the medium coating layer on the outer circumferential surface of the primary dried powder (or the nano-silicon particle) by gradually raising the inner pressure of the chamber while maintaining the raised temperature. Under this condition, the silicon carbide layer and the medium coating layer can be formed to have uniform thicknesses and good homogeneity. In particular, the hydrocarbon gas can easily spread between the multiple nano-silicon particles, whereby the silicon carbide layer and the medium coating layer can be formed to have uniform thicknesses and good homogeneity.

For example, the first intermediate material may be prepared by gradually raising the inner pressure of the chamber to 10¹ torr to 10⁵ torr.

The silicon carbide layer may have a higher hardness than the medium coating layer.

For example, the silicon carbide layer may have a pencil hardness of 7H or higher, as measured in accordance with ISO 15184. For example, the silicon carbide layer may have a pencil hardness of 8H or higher, 10H or higher, 8H to 13H, or 8H to 10H.

The medium coating layer may be formed by heat treatment of at least one of hydrocarbon gas and carbon black. For example, the hydrocarbon gas may include at least one of methane (CH₄), ethane (C₂H₆), propane (C₃H₈), butane (C₄H₁₀), and pentane (C₅H₁₂).

In one embodiment, the medium coating layer may be a non-crystalline or crystalline layer. Under this condition, the anode material can exhibit high strength and durability.

In one embodiment, the medium coating layer may have a pencil hardness of 2H to less than 4H, as measured in accordance with ISO 15184. Under this condition, the medium coating layer can prevent cracking or fracture of the anode material due to expansion of the nano-silicon particles to secure long lifespan of the anode material. For example, the medium coating layer may have a pencil hardness of 2H to 3H.

### (S30) Mixed slurry preparation step

In this step, a mixed slurry including the first intermediate material, a first coating material and a solvent is prepared.

In one embodiment, the mixed slurry may include 20 wt% to 85 wt% of the first intermediate material, 1 wt% to 15 wt% of the first coating material and 5 wt% to 75 wt% of the solvent. Within this range, the mixed slurry can secure good miscibility and dispersion.

In one embodiment, the first intermediate material may be present in an amount of 20 wt% to 85 wt%, based on the total weight of the anode material. Under this condition, the anode material can have good properties in terms of durability, long lifespan and high output. For example, the first intermediate material may be present in an amount of 25 wt% to 80 wt%, 30 wt% to 75 wt%, 30 wt% to 70 wt%, 30 wt% to 65 wt%, 30 wt% to 60 wt%, or 30 wt% to 50 wt%, based on the total weight of the anode material.

In one embodiment, the first coating material may include at least one of a hard coating material and a soft coating material.

The first coating material may have a spherical, polyhedral, elliptical or amorphous shape. For example, the first coating material may have a spherical shape.

In one embodiment, the first coating material may have an average particle diameter (d50) of 3 nm to 2.5 µm. Under this condition, the first coating material can secure good miscibility and dispersion. For example, the first coating material may have an average particle diameter (d50) of 5 nm to 1,000 nm, 10 nm to 500 nm, or 15 nm to 200 nm.

In one embodiment, the hard coating material may include a carbon material.

In one embodiment, the hard coating material may have a pencil hardness of greater than 4H to 6H, as measured in accordance with ISO 15184. Under this condition, the hard coating material can prevent fracture of the anode material upon expansion of the nano-silicon particles while securing good properties in terms of high output and electrical properties. For example, the hard coating material may have a pencil hardness of 4.5H to 6H. For example, the hard coating material may include a carbon material having a pencil hardness of 4.5H to 6H.

For example, the hard coating material may include NanoMollisAdamas products available from Lemon Energy Co., Ltd.

The hard coating material may have an amorphous phase. In addition, the hard coating material is prepared through self-assembly and exhibits good properties in terms of isotropic properties and heat stability to prevent structural change at high temperature (at about 3,000°C).

The hard coating material may have high-gas impermeability while exhibiting good chemical resistance and electrical conductivity. In addition, the hard coating material may be dust free and may have a purity (impurity content) of 5 ppm or less or a purity (impurity content) of 2 ppm or less. Under this condition, the hard coating material can secure good strength and electrical properties, and the anode material can exhibit good electrical conductivity.

In one embodiment, the hard coating material may have a resistivity of 3 µΩ·m to 5 µΩ·m. Under this condition, the anode material can exhibit good electrical conductivity.

In one embodiment, the soft coating material may include at least one of pitch, coke and carbon precursors formed of other organic materials. For example, the pitch may include at least one of pyrolysis fuel oil pitch and coal tar pitch.

In one embodiment, the first coating material may be present in an amount of 1 wt% to 15 wt%, based on the total weight of the anode material. Under this condition, the first coating material can secure good miscibility and dispersion of the mixed slurry and the anode material can have good properties in terms of durability, electrical conductivity, long lifespan and high output. For example, the first coating material may be present in an amount of 1 wt% to 13 wt%, 2 wt% to 10 wt%, 3 wt% to 10 wt%, 3 wt% to 8 wt%, or 3 wt% to 6 wt%, based on the total weight of the anode material.

In one embodiment, the solvent may include at least one of water, an alcohol-based solvent, an amide-based solvent, an ester-based solvent, and a hydrocarbon-based solvent. The solvent serves to secure good miscibility and workability. The alcohol-based solvent may include at least one of methanol, ethanol, isopropanol, and butanol. The amide-based solvent may include at least one of N-methyl-2-pyrrolidone (NMP), dimethyl acetamide (DMAC), and dimethyl formamide (DMF). The hydrocarbon-based solvent may include toluene and/or xylene.

In one embodiment, the solvent may be present in an amount of 5 wt% to 75 wt%, based on the total weight of the anode material. Under this condition, the solvent can secure good miscibility and dispersion. For example, the solvent may be present in an amount of 10 wt% to 70 wt%, 10 wt% to 65 wt%, 15 wt% to 60 wt%, 15 wt% to 50 wt%, 20 wt% to 50 wt%, or 25 wt% to 50 wt%, based on the total weight of the anode material.

In one embodiment, the mixed slurry may be prepared by dispersing the first intermediate material in the solvent and further adding the first coating material, followed by stirring and dispersing. For example, the mixed slurry may be prepared by a method such as stirring, ultrasound dispersion and the like.

### (S40) Secondary dried powder preparation step

In this step, a mixed slurry is dried to prepare secondary dried powder. For example, the secondary dried powder may be prepared by drying the mixed slurry at 60°C to 130°C.

In one embodiment, the secondary dried powder may have an average particle diameter (or size) of 0.01 µm to 15 µm. Under this condition, the secondary dried powder can secure good miscibility and formability.

In one embodiment, as prepared by spray-drying the mixed slurry using a single-fluid nozzle at an air flow rate of 650 sccm to 850 sccm with the spray dryer set to have an outlet temperature of 70°C to 130°C, the secondary dried powder may have an average particle diameter of 0.1 µm to 14 µm. In another embodiment, as prepared by spray drying the mixed slurry using a four-fluid nozzle, the secondary dried powder may have an average particle diameter of 0.05 µm to 8 µm.

### (S50) Second intermediate material preparation step

In this step, a second intermediate material is prepared by sintering the secondary dried powder.

In one embodiment, the second intermediate material may be prepared by sintering the secondary dried powder at 850°C to 1,050°C. Under this condition, the second intermediate material can secure good properties in terms of mechanical strength, high output and long lifespan. For example, the second intermediate material may be prepared by sintering at 850°C to 1,000°C, 860 to 970°C, or 870°C to 950°C.

In one embodiment, sintering may be performed under an inert gas atmosphere. The inert gas may include nitrogen.

In another embodiment, the second intermediate material preparation step may include sintering a first mixture including the secondary dried powder and a second coating material. With the second coating material, the second intermediate material can have good properties in terms of mechanical strength, high output, and long lifespan.

In one embodiment, the second coating material may include at least one of a hard coating material and a soft coating material. The second coating material may be the same kind as or a different kind than the first coating material.

For example, the hard coating material may include a carbon material.

In one embodiment, the hard coating material may have a pencil hardness of greater than 4H to 6H, as measured in accordance with ISO 15184. Under this condition, the hard coating material can prevent fracture of the anode material upon expansion of the nano-silicon particles while securing good properties in terms of high output and electrical properties. For example, the hard coating material may have a pencil hardness of 4.5H to 6H. For example, the hard coating material may include a carbon material having a pencil hardness of 4.5H to 6H.

For example, the hard coating material may include NanoMollisAdamas products available from Lemon Energy Co., Ltd.

The hard coating material may have an amorphous phase. In addition, the hard coating material is prepared through self-assembly and exhibits good properties in terms of isotropic properties and heat stability to prevent structural change at high temperature (at about 3,000°C).

The hard coating material may have high-gas impermeability while exhibiting good chemical resistance and electrical conductivity. In addition, the hard coating material may be dust free and may have a purity (impurity content) of 5 ppm or less or a purity (impurity content) of 2 ppm or less. Under this condition, the hard coating material can secure good strength and electrical properties, and the anode material can exhibit good electrical conductivity.

In one embodiment, the hard coating material may have a resistivity of 3 µΩ·m to 5 µΩ·m. Under this condition, the anode material can exhibit good electrical conductivity.

In one embodiment, the soft coating material may include at least one of pitch, coke and carbon precursors formed of other organic materials. For example, the pitch may include at least one of pyrolysis fuel oil pitch and coal tar pitch.

The second coating material may have a spherical, polyhedral, elliptical or amorphous shape. For example, the second coating material may have a spherical shape.

In one embodiment, the second coating material may have an average particle diameter (d50) of 3 nm to 2.5 µm. Under this condition, the second intermediate material can be easily formed by sintering. For example, the second coating material may have an average particle diameter (d50) of 5 nm to 1,000 nm, 10 nm to 500 nm, or 15 nm to 200 nm.

In one embodiment, the first mixture may include 80 wt% to 95 wt% of the secondary dried powder and 5 wt% to 20 wt% of the second coating material. Under this condition, the second intermediate material can have good properties in terms of mechanical strength, high output and long lifespan.

In another embodiment, the second intermediate material preparation step may include: subjecting the secondary dried powder to primary sintering at 850°C to 1,050°C; and subjecting the first mixture including the secondary dried powder subjected to primary sintering and the second coating material to secondary sintering at 850°C to 1,050°C.

By primary sintering and secondary sintering under this condition, the second intermediate material can have good properties in terms of mechanical strength, high output and long lifespan.

For example, the primary sintering may be performed at 850°C to 1,000°C, 860°C to 970°C, 870°C to 950°C, or 900°C to 930°C.

The secondary sintering may be performed at the same temperature as or at a different temperature than the primary sintering. For example, the secondary sintering may be performed at 850°C to 1,000°C, 860°C to 970°C, 870°C to 950°C, or 900°C to 930°C.

In one embodiment, the primary sintering and the secondary sintering may be performed in an inert gas atmosphere. The inert gas may include nitrogen.

In one embodiment, the second coating material may be the same as described above. The second coating material may include at least one of a hard coating material and a soft coating material.

For example, the second coating material may be the same as or different from the first coating material.

For example, the second intermediate material may be prepared by drying the mixed slurry including 20 wt% to 85 wt% of the first intermediate material, 1 wt% to 15 wt% of the first coating material (hard coating material), and 5 wt% to 75 wt% of the solvent to prepare the secondary dried powder, subjecting the secondary dried powder to primary sintering at 900°C to 1,050°C, and subjecting a first mixture including the secondary dried powder subjected to primary sintering and a second coating material (soft coating material) to secondary sintering at 870°C to 950°C. Here, the second intermediate material may include a hard coating layer and a soft coating layer sequentially formed as the first coating layer on the outer circumferential surface of the medium coating layer.

In one embodiment, the first mixture may include 80 wt% to 95 wt% of the secondary dried powder and 5 wt% to 20 wt% of the second coating material. Under this condition, the second intermediate material can have good properties in terms of mechanical strength, high output and long lifespan.

The second intermediate material includes nano-silicon particles, a medium coating layer formed on an outer circumferential surface of the nano-silicon particle, and a first coating layer formed on an outer circumferential surface of the medium coating layer.

The first coating layer includes at least one of a hard coating layer and a soft coating layer.

In one embodiment, the first coating layer may include the hard coating layer and the soft coating layer in a weight ratio of 1:0.5 to 1:3. Within this range of weight ratio, the anode material can have good properties in terms of high output and long lifespan. For example, the first coating layer may include the hard coating layer and the soft coating layer in a weight ratio of 1:1 to 1:3, 1:1.5 to 1:3, or 1:2 to 1:3.

In one embodiment, the second intermediate material may include the medium coating layer and the first coating layer in a weight ratio of 1:0.5 to 1:6. Within this range of weight ratio, the anode material does not suffer from cracking and fracture even upon expansion of the nano-silicon particles and can secure high output and long lifespan. For example, the second intermediate material may include the medium coating layer and the first coating layer in a weight ratio of 1:0.8 to 1:5, 1:1 to 1:4, 1:1 to 1:3, or 1:1.5 to 1:3.

In one embodiment, the second intermediate material may further include a silicon carbide (SiC) layer between the nano-silicon particle and the medium coating layer.

The silicon carbide layer can improve ionic conductivity and electrical conductivity of the nano-silicon particles while securing a stable ion charge/discharge path to provide low contact resistance, thereby preventing fracture of the anode material due to expansion of the nano-silicon particles.

In one embodiment, the silicon carbide (SiC) layer may have a thickness of 1 nm to 15 nm. Under this condition, the anode material can have good properties in terms of durability, ionic conductivity and electrical conductivity, and can have low contact resistance. For example, the anode material may have a thickness of 1 nm to 12 nm, 1 nm to 10 nm, 2 nm to 10 nm, 3 nm to 10 nm, 3 nm to 8 nm, or 3 nm to 5 nm.

In one embodiment, the silicon carbide layer may have a higher hardness than the medium coating layer and the hard coating layer. Under this condition, the silicon carbide layer can exhibit good electrical conductivity and can prevent fracture of the anode material due to expansion of the nano-silicon particles

For example, the silicon carbide layer may have a pencil hardness of 7H or higher, as measured in accordance with ISO 15184. For example, the silicon carbide layer may have a pencil hardness of 8H or higher, 10H or higher, 8H to 13H, or 8H to 10H.

In one embodiment, the silicon carbide layer may be present in an amount of 1 wt% to 25 wt%, based on the total weight of the anode material. Under this condition, the silicon carbide layer can secure good properties in terms of durability, ionic conductivity and electrical conductivity, and can have low contact resistance. For example, the silicon carbide layer may be present in an amount of 1 wt% to 20 wt%, 1 wt% to 15 wt%, 1 wt% to 10 wt%, 1 wt% to 8 wt%, 2 wt% to 8 wt%, or 2 wt% to 5 wt%, based on the total weight of the anode material. For example, the silicon carbide layer may be present in an amount of 1, 2, 3, 4, 5, 6, 7, 8, 9, 10, 11, 12, 13, 14, 15, 16, 17, 18, 19, 20, 21, 22, 23, 24 or 25 wt% based on the total weight of the anode material.

In one embodiment, the silicon carbide layer and the medium coating layer may have a thickness ratio of 1:1 to 1:4. Under this condition, the anode material can have good properties in terms of electrical conductivity and durability without suffering from fracture due to expansion of the nano-silicon particles. For example, the silicon carbide layer and the medium coating layer may be present in a weight ratio of 1:1.5 to 1:3.

In one embodiment, the second intermediate material may be prepared by sintering the secondary dried powder at 850°C to 1,050°C.

In one embodiment, the second intermediate material preparation step may include subjecting the secondary dried powder to primary sintering at 850°C to 1,050°C; subjecting the first mixture including the secondary dried powder subjected to primary sintering and the second coating material to secondary sintering at 850°C to 1,050°C, wherein the second coating material may include at least one of the hard coating material and the soft coating material.

### (S60) Second coating layer formation step

In one embodiment, the method may further include forming a second coating layer on an outer circumferential surface of the second intermediate material (S60) after preparation of the second intermediate material (S50).

The second coating layer may include a medium coating layer and may be formed by heat treatment of the second intermediate material in a hydrocarbon gas atmosphere.

In one embodiment, heat treatment may be performed at 850°C to 970°C. Under this condition, the medium coating layer can be easily formed. For example, heat treatment may be performed at 870°C to 960°C, 890°C to 960°C, 900°C to 950°C, or 900°C to 935°C.

In one embodiment, heat treatment may be performed in a vacuum. Under this condition, the hydrocarbon gas can be evenly diffused between the nano-silicon particles, thereby forming a homogeneous medium coating layer through heat treatment. For example, heat treatment may be performed in a vacuum of 10⁻¹ torr to 10⁻⁶ torr.

In another embodiment, the second coating layer may be prepared by raising the inner temperature of the chamber with the second intermediate material placed in the chamber while decreasing the inner pressure of the chamber to introduce hydrocarbon gas into the chamber, followed by forming the second coating layer (medium coating layer) on an outer circumferential surface of the second intermediate material (or the first coating layer) by gradually raising the inner pressure of the chamber upon pyrolysis of the hydrocarbon gas. Under this condition, a medium coating layer having a uniform thickness and good homogeneity can be formed.

For example, the second coating layer formation step may include: raising the inner temperature of the chamber receiving the second intermediate material therein to 850°C to 970°C while decreasing the inner pressure of the chamber to 10⁻¹ torr to 10⁻⁶ torr; introducing hydrocarbon gas into the decompressed chamber so as to contact the second intermediate material; and gradually raising the inner pressure of the chamber while maintaining the raised temperature of the chamber to form the second coating layer (medium coating layer) on the outer circumferential surface of the second intermediate material (first coating layer) through pyrolysis of the hydrocarbon gas.

Upon decompression of the chamber under the above condition, the hydrocarbon gas can easily spread in the second intermediate material, and upon raising the inner pressure of the chamber under this condition, the medium coating layer having a uniform thickness and good homogeneity can be formed on the outer circumferential surface of the second intermediate material.

For example, the second coating layer may be prepared by gradually raising the inner pressure of the chamber to 10¹ torr to 10⁵ torr.

The medium coating layer may be formed by heat treatment of at least one of hydrocarbon gas and carbon black. For example, the hydrocarbon gas may include at least one of methane (CH₄), ethane (C₂H₆), propane (C₃H₈), butane (C₄H₁₀), and pentane (C₅H₁₂).

In one embodiment, the medium coating layer may be a non-crystalline or crystalline layer. Under this condition, the anode material can exhibit high strength and durability.

In one embodiment, the medium coating layer may have a pencil hardness of 2H to 4H, as measured in accordance with ISO 15184. Under this condition, the medium coating layer can prevent cracking or fracture of the anode material due to expansion of the nano-silicon particles to secure long lifespan of the anode material. For example, the medium coating layer may have a pencil hardness of 2H to 3H.

In one embodiment, the second coating layer may have a thickness of 3 nm to 50 nm. Under this condition, the second coating layer can prevent cracking or fracture of the anode material due to expansion of the nano-silicon particles while securing good properties in terms of high output and electrical conductivity. For example, the second coating layer may have a thickness of 3 nm to 15 nm, 5 nm to 15 nm, 6 nm to 15 nm, or 10 nm to 15 nm.

In one embodiment, the second coating layer may have a density of greater than 1.5 g/cm³ to 1.7 g/cm³. Under this condition, the second coating layer can exhibit good structural stability and is lightweight. For example, the second coating layer may have a density of greater than 1.5 g/cm³ to 1.7 g/cm³.

In one embodiment, the second coating layer may have a specific surface area (BET) of 100 m²/g to 200 m²/g. Under this condition, the anode material can have good structural stability.

In one embodiment, the medium coating layer may have a purity (impurity content) of 500 ppm or less. Under this condition, the anode material can exhibit good electrical conductivity.

In one embodiment, the medium coating layer may have a resistivity of 20 µΩ·m to 40 µΩ·m. Under this condition, the anode material can exhibit good electrical conductivity. In one embodiment, the second coating layer may be present in an amount of 1 wt% to 40 wt%, based on the total weight of the anode material. Within this range, the second coating layer can secure electrical conductivity, can prevent cracking or fracture of the anode material due to expansion of the nano-silicon particles, and can minimize reduction in capacity to secure long lifespan. For example, the second coating layer may be present in an amount of 1 wt% to 35 wt%, 1 wt% to 30 wt%, 1 wt% to 25 wt%, 1 wt% to 20 wt%, 1 wt% to 15 wt%, 1 wt% to 10 wt%, 1 wt% to 8 wt%, 2 wt% to 8 wt%, or 2 wt% to 5 wt%, based on the total weight of the anode material.

In one embodiment, the anode material may include the medium coating layer, the first coating layer and the second coating layer in a weight ratio of 1:0.5 to 6:0.1 to 4. Within this range of weight ratio, the anode material does not suffer from cracking and fracture even upon expansion of the nano-silicon particles while securing high output and long lifespan. For example, the anode material may include the medium coating layer, the first coating layer and the second coating layer in a weight ratio of 1:0.8 to 5:0.3 to 4, 1:1 to 4:0.5 to 3.5, 1:1 to 3:1 to 2.5 or 1:1.5 to 3:1 to 2.

In another embodiment, the anode material may include the medium coating layer, the silicon carbide layer, the first coating layer and the second coating layer in a weight ratio of 1:0.1 to 3:0.5 to 6:0.1 to 4. Within this range of weight ratio, the anode material does not suffer from cracking and fracture even upon expansion of the nano-silicon particles while securing high output and long lifespan. For example, the anode material may include the medium coating layer, the silicon carbide layer, the first coating layer and the second coating layer in a weight ratio of 1:0.1 to 2:0.8 to 5:0.3 to 4, 1:0.3 to 1.5:1 to 4:0.5 to 3.5, 1:0.5 to 1.2:1 to 3:1 to 2.5 or 1:0.5 to 1:1.5 to 3:1 to 2.

### Secondary battery including silicon carbon composite anode material

A further aspect of the present invention relates to a secondary battery including the silicon carbon composite anode material. In one embodiment, the secondary battery may include a cathode; an anode; and an electrolyte disposed between the cathode and the anode, wherein the anode includes the anode material.

The secondary battery may include a lithium secondary battery. In one embodiment, the lithium secondary battery may include a cathode including a cathode material; an anode spaced apart from the cathode and including the anode material; an electrolyte disposed between the anode and the cathode; and a separator disposed between the anode and the cathode to prevent electrical short of the anode and the cathode.

In one embodiment, each of the cathode and the anode may be manufactured by depositing a mixture comprising an active material, a conductive material and a binder on one surface of an electrode plate (electricity collector), followed by drying and pressing the mixture.

In one embodiment, each of a cathode plate and an anode plate may include at least one of copper, stainless steel, aluminum, nickel, and titanium.

In another example, the anode plate may be nickel foam, copper foam, a metal coated polyimide film, or a combination thereof.

In another example, the anode plate may include a copper foil, a carbon-coated copper foil, a copper foil having a surface roughness of 5 nm or more, a nickel foil, a stainless steel foil, a nickel-coated iron (Fe) foil, and a copper foil formed with holes having a size of 1 µm to 50 µm.

In one embodiment, the cathode material may include a composite oxide of a metal and lithium. The metal may include at least one of cobalt (Co), manganese (Mn), aluminum (Al), and nickel (Ni). For example, the metal may include at least one of lithium-nickel oxide, lithium-nickel-cobalt oxide, lithium-nickel-cobalt-manganese oxide, and lithium-nickel-cobalt-aluminum oxide.

In one embodiment, the conductive material may include at least one of natural graphite, artificial graphite, carbon black, acetylene black, Ketjen black, channel black, carbon fiber, metal fiber, carbon fluoride, aluminum, nickel powder, zinc oxide, potassium titanate, titanium oxide, and polyphenylene compounds.

In one embodiment, the binder may include polyvinylidene fluoride, polyvinyl alcohol, carboxymethylcellulose (CMC), starch, hydroxypropylcellulose, polyvinyl pyrrolidone, polytetrafluoroethylene, polyethylene, polypropylene, ethylene-propylene-diene monomer (EPDM), styrene rubber, and fluorine rubber.

In one embodiment, the separator may be a typical separator. For example, the separator may include at least one of polyester, polyethylene, polypropylene, and polytetrafluoroethylene (PTFE). The separator may be realized in the form of non-woven fabrics or woven fabrics. The separator is a porous structure having an average pore diameter of 0.01 µm to 10 µm and a thickness of 5 µm to 500 µm.

In one embodiment, the electrolyte may include a non-aqueous organic solvent and a lithium salt. For example, the non-aqueous organic solvent may include at least one of a carbonate solvent, an ester solvent, an ether solvent, and a ketone solvent. The carbonate solvent may include at least one of vinylene carbonate (VC), dimethyl carbonate (DMC), diethyl carbonate (DEC), dipropyl carbonate (DPC), fluoroethylene carbonate (FEC), methyl propyl carbonate (MPC), ethyl methyl carbonate (EMC), ethyl propyl carbonate (EPC), ethylene carbonate (EC), propylene carbonate (PC), and butylene carbonate (BC).

The ester solvent may include at least one of butyrolactone, decanolide, valerolactone, caprolactone, n-methyl acetate, n-ethyl acetate, and n-propyl acetate. The ether solvent may include dibutyl ether and the like. The ketone solvent may include poly(methyl vinyl ketone).

The lithium salt may act as a source of lithium ions in a battery. For example, the lithium salt may include at least one of LiPF₆, LiBF₄, LiSbF₆, LiAsF₆, LiClO₄, LiCF₃SO₃, LiN(CF₃SO₂)₂, LiN(C₂F₅SO₂)₂, LiAlO₄, and LiAlCl₄, without being limited thereto.

In one embodiment, the electrolyte may include at least one of vinylene carbonate, vinyl ethylene carbonate, monofluoroethylene carbonate, difluoroethylene carbonate, succinic anhydride, and 1,3-propane sultone.

In one embodiment, the lithium secondary battery may include a prismatic battery, a cylindrical battery, and a pouch-type battery.

Next, the present invention will be described in more detail with reference to examples. However, it should be understood that these examples are provided for illustration only and should not be construed in any way as limiting the invention.

### Examples and Comparative Example

### Example 1

(1) Preparation of nano-silicon slurry and primary dried powder: Silicon powder having an average particle diameter (d50) of 0.5 µm was prepared. A dispersion comprising 100 parts by weight of the silicon powder, 0.1 parts by weight of a dispersant (stearic acid), and 900 parts by weight of a first solvent (ethanol) was prepared and ground by milling to prepare a nano-silicon slurry (viscosity: 4,320 cP at 25°C) comprising nano-silicon particles having an average particle diameter (d50) of 200 nm (a radius of 100 nm). Then, primary dried powder was prepared by drying the nano-silicon slurry using a rotational spray dryer at a disc RPM of 20,000 rpm to 30,000 rpm.
(2) Preparation of first intermediate material: With the primary dried powder placed in a chamber, the inner temperature of the chamber was raised to 900°C to 920°C while decreasing the inner pressure of the chamber to 10⁻² torr to 10⁻⁶ torr. Next, hydrocarbon (CH₄) gas was introduced into the decompressed chamber so as to contact the primary dried powder. Next, the inner pressure of the chamber was gradually raised to 10² torr to 10³ torr while maintaining the raised temperature of the chamber to form a first intermediate material having a medium coating layer on an outer circumferential surface of the primary dried powder through pyrolysis of the hydrocarbon gas.
(3) Preparation of mixed slurry and secondary dried powder: After dispersion of the first intermediate material in a solvent (ethanol), a mixture slurry was prepared by adding a first coating material (carbon material having a pencil hardness of 4.5H in accordance with ISO 15184 and an average particle diameter (d50) of 0.05 µm to 0.5 µm as a hard coating material, NanoMollisAdamas, Lemon Energy Co., Ltd.) to the dispersion. The mixed slurry included 20 wt% to 40 wt% of the first intermediate material, 3 wt% to 10 wt% of the first coating material, and 50 wt% to 70 wt% of the solvent. Next, secondary dried powder was prepared by drying the mixed slurry using a rotational spray dryer.
(4) Preparation of second intermediate material: After subjecting the secondary dried powder to primary sintering at 900°C to 1,050°C, a first mixture including 80 wt% to 95 wt% of the secondary dried powder subjected to primary sintering and 5 wt% to 20 wt% of a second coating material (soft coating material including pitch having an average particle diameter (d50) of 0.03 µm to 5 µm) was prepared. Next, a second intermediate material was prepared by subjecting the first mixture to secondary sintering at 870°C to 950°C. Then, an anode material was prepared by crushing and classifying the second intermediate material.

The anode material included nano-silicon particles having an average particle diameter (d50) of 50 nm, a medium coating layer (thickness: 10 nm to 20 nm, pencil hardness: 2H to 3H in accordance with ISO 15184, density: 1.6 g/cm³ to 1.7 g/cm³) formed on an outer circumferential surface of the nano-silicon particle and a first coating layer formed on an outer circumferential surface of the medium coating layer.

The first coating layer included a hard coating layer (thickness: 10 nm to 15 nm, pencil hardness: 5H to 6H in accordance with ISO 15184, density: 2.2 g/cm³) and a soft coating layer (thickness: 5 nm to 15 nm, pencil hardness: B in accordance with ISO 15184, density: 1.3 g/cm³) sequentially formed therein.

The anode material included 25 wt% to 80 wt% of the nano-silicon particles, 1 wt% to 40 wt% of the medium coating layer, and 1 wt% to 60 wt% of the first coating layer, in which the medium coating layer and the first coating layer were present in a weight ratio of 1:1 to 1:3.

### Example 2

After dispersion of the first intermediate material of Example 1 in a solvent (ethanol), a mixed slurry was prepared by adding a first coating material (soft coating material including pitch having an average particle diameter (d50) of 0.03 µm to 5 µm) to the dispersion. The mixed slurry included 25 wt% to 60 wt% of the first intermediate material, 2 wt% to 5 wt% of the first coating material, and 35 wt% to 70 wt% of the solvent. Next, secondary dried powder was prepared by drying the mixed slurry using a rotational spray dryer.

After subjecting the secondary dried powder to primary sintering at 870°C to 950°C, a first mixture including 80 wt% to 95 wt% of the secondary dried powder subjected to primary sintering and 5 wt% to 20 wt% of a second coating material (carbon material having a pencil hardness of 4.5H in accordance with ISO 15184 and an average particle diameter (d50) of 0.05 µm to 0.5 µm as a hard coating material, NanoMollisAdamas, Lemon Energy Co., Ltd.) was prepared. Next, a second intermediate material was prepared by subjecting the first mixture to secondary sintering at 900°C to 1,050°C. Then, an anode material was prepared by crushing and classifying the second intermediate material.

The anode material included nano-silicon particles having an average particle diameter (d50) of 50 nm, a medium coating layer formed on an outer circumferential surface of the nano-silicon particle (thickness: 10 nm to 20 nm, pencil hardness: 2H to 3H in accordance with ISO 15184, density: 1.6 g/cm³ to 1.7 g/cm³), and a first coating layer formed on an outer circumferential surface of the medium coating layer.

The first coating layer included a soft coating layer (thickness: 5 nm to 15 nm, pencil hardness: B in accordance with ISO 15184, density: 1.3 g/cm³) and a hard coating layer (thickness: 10 nm to 15 nm, pencil hardness: 5H to 6H in accordance with ISO 15184, density: 2.2 g/cm³) sequentially formed therein.

The anode material included 25 wt% to 80 wt% of the nano-silicon particles, 1 wt% to 40 wt% of the medium coating layer, and 1 wt% to 60 wt% of the first coating layer, in which the medium coating layer and the first coating layer were present in a weight ratio of 1:1 to 1:3.

### Example 3

A second intermediate material was prepared by sintering the secondary dried powder of Example 1 at 900°C to 1,050°C. Then, an anode material was prepared by crushing and classifying the second intermediate material.

The anode material included nano-silicon particles having an average particle diameter (d50) of 50 nm, a medium coating layer formed on an outer circumferential surface of the nano-silicon particle (thickness: 10 nm to 20 nm, pencil hardness: 2H to 3H in accordance with ISO 15184, density: 1.6 g/cm³ to 1.7 g/cm³), and a first coating layer formed on an outer circumferential surface of the medium coating layer (hard coating layer, thickness: 10 nm to 15 nm, pencil hardness: 5H to 6H in accordance with ISO 15184, density: 2.2 g/cm³).

The anode material included 25 wt% to 80 wt% of the nano-silicon particles, 1 wt% to 40 wt% of the medium coating layer, and 1 wt% to 60 wt% of the first coating layer, in which the medium coating layer and the first coating layer were present in a weight ratio of 1:0.5 to 1:2.

### Example 4

With the second intermediate material of Example 1 placed in the chamber, the inner temperature of the chamber was raised to 900°C to 920°C while decreasing the inner pressure of the chamber to 10⁻² torr to 10⁻⁶ torr. Next, hydrocarbon (CH₄) gas was introduced into the decompressed chamber so as to contact the second intermediate material. Next, the inner pressure of the chamber was gradually raised to 10² torr to 10³ torr while maintaining the raised temperature of the chamber to form a second coating layer (medium coating layer) formed on an outer circumferential surface of the second intermediate material through pyrolysis of the hydrocarbon gas.

The anode material included nano-silicon particles having an average particle diameter (d50) of 50 nm, a medium coating layer (thickness: 10 nm to 20 nm, pencil hardness: 2H to 3H in accordance with ISO 15184, density: 1.6 g/cm³ to 1.7 g/cm³) formed on an outer circumferential surface of the nano-silicon particle, a first coating layer formed on an outer circumferential surface of the medium coating layer, and a second coating layer formed on an outer circumferential surface of the first coating layer.

The first coating layer included a hard coating layer (thickness: 10 nm to 15 nm, pencil hardness: 5H to 6H in accordance with ISO 15184, density: 2.2 g/cm³) and a soft coating layer (thickness: 5 nm to 15 nm, pencil hardness: B in accordance with ISO 15184, density: 1.3 g/cm³) sequentially formed therein, in which a medium coating layer (thickness: 10 nm to 20 nm, pencil hardness: 2H in accordance with ISO 15184, density: 1.6 to 1.7 g/cm³) was formed as the second coating layer.

The anode material included 25 wt% to 80 wt% of the nano-silicon particles, 1 wt% to 40 wt% of the medium coating layer, 2 wt% to 50 wt% of the first coating layer (1 wt% to 30 wt% of the hard coating layer and 1 wt% to 20 wt% of the soft coating layer), and 1 wt% to 30 wt% of the second coating layer, in which the medium coating layer, the first coating layer and the second coating layer were present in a weight ratio of 1:2 to 4:1 to 1.5.

### Example 5

A first composition including graphite and primary dried powder prepared in the same manner as in Example 1 was prepared. With the first composition placed in the chamber, the inner temperature of the chamber was raised to 900°C to 1000°C while decreasing the inner pressure of the chamber to 10⁻² torr to 10⁻⁶ torr. Next, hydrocarbon gas (CH₄) and a buffer gas (nitrogen (N₂) gas) were introduced into the decompressed chamber so as to contact the first composition. Next, a first intermediate material including a silicon carbide layer and a medium coating layer sequentially on the surface of the primary dried powder (nano-silicon particle) through pyrolysis of the hydrocarbon gas was prepared by gradually raising the inner pressure of the chamber to 10² torr to 10³ torr while maintaining the raised temperature of the chamber.

A second intermediate material was prepared in the same manner as in Example 1 using the prepared first intermediate material. With the second intermediate material placed in the chamber, the inner temperature of the chamber was raised to 900°C to 920°C while decreasing the inner pressure of the chamber to 10⁻² torr to 10⁻⁶ torr. Next, hydrocarbon (CH₄) gas was introduced into the decompressed chamber so as to contact the second intermediate material. Next, the inner pressure of the chamber was gradually raised to 10² torr to 10³ torr while maintaining the raised temperature of the chamber to form a second coating layer (medium coating layer) on an outer circumferential surface of the second intermediate material through pyrolysis of the hydrocarbon gas, thereby preparing an anode material.

The anode material included nano-silicon particles having an average particle diameter (d50) of 500 nm; a silicon carbide layer (thickness: 3 nm, pencil hardness: 7.5H to 8.5H in accordance with ISO 15184), a medium coating layer (thickness: 7 nm, pencil hardness: 2H to 3H in accordance with ISO 15184, density: 1.6 g/cm³ to 1.7 g/cm³) and a first coating layer sequentially formed on an outer circumferential surface of the nano-silicon particle; and a second coating layer formed on an outer circumferential surface of the first coating layer.

The first coating layer included a hard coating layer (thickness: 15 nm, pencil hardness: 5H to 6H in accordance with ISO 15184, density: 2.2 g/cm³) and a soft coating layer (thickness: 10 nm, pencil hardness: B in accordance with ISO 15184, density: 1.3 g/cm³) sequentially formed therein, and the second coating layer was a medium coating layer (thickness: 10 nm to 20 nm, pencil hardness: 2H in accordance with ISO 15184, density: 1.6 g/cm³ to 1.7 g/cm³).

The anode material included 25 wt% to 80 wt% of the nano-silicon particles, 1 wt% to 10 wt% of the silicon carbide layer, 1 wt% to 30 wt% of the medium coating layer, 1 wt% to 60 wt% of the first coating layer, and 1 wt% to 30 wt% of the second coating layer, in which the medium coating layer, the silicon carbide layer, first coating layer and the second coating layer were present in a weight ratio of 1:0.5 to 1:2 to 4:1 to 1.5.

### Example 6

A first intermediate material including a silicon carbide layer and a medium coating layer sequentially formed on the surface of primary dried powder (nano-silicon particle) was prepared in the same manner as in Example 5. Next, after dispersion of the first intermediate material in a solvent (ethanol), a mixture slurry was prepared by adding a first coating material (soft coating material including pitch having an average particle diameter (d50) of 0.03 µm to 5 µm) to the dispersion. The mixed slurry included 25 wt% to 60 wt% of the first intermediate material, 2 wt% to 5 wt% of the first coating material, and 35 wt% to 70 wt% of the solvent. Next, secondary dried powder was prepared by drying the mixed slurry using a rotational spray dryer.

Next, a second intermediate material was prepared in the same manner as in Example 5 using the secondary dried powder and a second coating layer (medium coating layer) was formed on an outer circumferential surface of the second intermediate material, thereby preparing an anode material.

The anode material included nano-silicon particles having an average particle diameter (d50) of 50 nm, a silicon carbide layer (thickness: 3 nm, pencil hardness: 7.5H to 8.5H in accordance with ISO 15184) and a medium coating layer (thickness: 10 nm to 20 nm, pencil hardness: 2H to 3H in accordance with ISO 15184, density: 1.6 g/cm³ to 1.7 g/cm³) sequentially formed on an outer circumferential surface of the nano-silicon particle, a first coating layer formed on an outer circumferential surface of the medium coating layer, and a second coating layer formed on an outer circumferential surface of the first coating layer.

The first coating layer included a soft coating layer (thickness: 5 nm to 15 nm, pencil hardness: B in accordance with ISO 15184, density: 1.3 g/cm³) and a hard coating layer (thickness: 10 nm to 15 nm, pencil hardness: 5H to 6H in accordance with ISO 15184, density: 2.2 g/cm³) sequentially formed therein, and the second coating layer was a medium coating layer (thickness: 10 nm to 20 nm, pencil hardness: 2H in accordance with ISO 15184, density: 1.6 to 1.7 g/cm³).

The anode material included 25 wt% to 80 wt% of the nano-silicon particles, 1 wt% to 10 wt% of the silicon carbide layer, 1 wt% to 40 wt% of the medium coating layer, 2 wt% to 55 wt% of the first coating layer (1 wt% to 25 wt% of the soft coating layer and 1 wt% to 30 wt% of the hard coating layer), and 1 wt% to 30 wt% of the second coating layer, in which the medium coating layer, the silicon carbide layer, the first coating layer and the second coating layer were present in a weight ratio of 1:0.5 to 1:2 to 4:1 to 1.5.

### Comparative Example 1

Sintered powder was prepared by sintering only the dried powder prepared in Example 1 at 900°C to 1,050°C in an inert gas atmosphere. Thereafter, an intermediate material (anode material) was prepared by mixing the sintered powder with a soft coating material (including pitch having an average particle diameter (d50) of 3 µm to 5 µm), followed by sintering the mixture at 850°C to 975°C to form a first coating layer (soft coating layer), and was crushed and classified.

The anode material included a core including nano-silicon particles and a first coating layer (soft coating layer having a thickness: 10 nm to 20 nm, a pencil hardness of B in accordance with ISO 15184, and a density of 1.5 g/cm³) on an outer circumferential surface of the core.

The anode material included 25 wt% to 80 wt% of the nano-silicon particles and 20 wt% to 75 wt% of the first coating layer.

### Experimental Example

(1) Measurement of diffraction angle (2θ) at (111) and (220) planes, grain size at (111) plane, oxidation rate, and specific surface area of nano-silicon particles: The anode materials prepared in Examples and Comparative Example were measured as to the diffraction angles (2θ) at the (111) and (220) planes, grain size at the (111) plane, oxidation rate, and specific surface area of the nano-silicon particles.

Specifically, the diffraction angles (2θ) at the (111) and (220) planes of the nano-silicon particles were measured as to the nano-silicon particles of the anode materials of Examples and Comparative Example by a measurement instrument (Empyrean, Malvern Panalytical Co., Ltd.) based on an X-ray diffraction (XRD) spectrum using CuKα-rays at a wavelength of 1.54 Å.

In addition, the grain size of the nano-silicon particles prepared in Examples and Comparative Example was calculated according to a gain size equation (Scherrer Equation for K=9) based on the FWHM (full width at half maximum) values at the (111) plane in X-ray diffraction analysis using CuKα-rays. The oxidation rate of the nano-silicon particles was calculated based on the content of oxygen measured using a measurement instrument (ONH 836 Series, LECO), and the specific surface area thereof was measured using a BET meter (Micromeritics, Tristar II 3920). Table 1 shows measurement results.

**[Table 1]**

| Item | Grain size ( nm) at (111) | Oxygen content (wt%) | Specific surface area (m²/g) |
|---|---|---|---|
| Example 1 | 15.9 | 6.5 | 4.2 |
| Example 2 | 16.0 | 6.6 | 4.3 |
| Example 3 | 16.2 | 6.2 | 4.8 |
| Example 4 | 16.2 | 6.4 | 5.4 |
| Example 5 | 16.4 | 6.5 | 5.6 |
| Example 6 | 16.2 | 6.5 | 5.4 |
| Comparative Example 1 | 15.7 | 9.6 | 4.9 |

Referring to Table 1, it could be seen that the anode materials of Examples 1 to 6 had lower oxidation rates to have better properties in terms of high output and long lifespan than the anode material of Comparative Example 1.

The nano-silicon particles of the anode materials of Example 1 to 6 had effective peaks at a diffraction angle (2θ) of about 27.5° to 28.5°, 47° to 48°, 55° to 56°, 68° to 69°, 75° to 77°, and 88° to 89° in the X-ray diffraction spectrum, in which the effective peaks represent the (111), (220), (311), (400), (331), and (442) planes.

FIG. 4 is a graph depicting XRD analysis results of nano-silicon particles of an anode material of Example 1 and nano-silicon particles having a medium coating layer formed thereon. Referring to FIG. 4, it could be seen that the nano-silicon particles of the anode materials of Example 1 had the highest effective peak at a diffraction angle (2θ) in the range of 26° to 30° at the (111) plane and an effective peak at a diffraction angle (2θ) in the range of 47° to 50° at the (220) plane in the X-ray diffraction (XRD) spectrum.

In addition, it could be seen that the nano-silicon particles having the medium coating layer of Example 1 thereon had higher peak intensity at a diffraction angle (2θ) in the range of 26° to 30° and at a diffraction angle (2θ) in the range of 47° to 50° in the X-ray diffraction (XRD) spectrum.

From the results of FIG. 4, it could be seen that, when the medium coating layer was formed on the nano-silicon particles, the peak intensity of silicon was enhanced. Further, since improvement in peak intensity was not observed when the medium coating layer was formed to an uneven thickness, it could be seen that the medium coating layer was formed to a uniform thickness in Example 1.

Further, the nano-silicon particles of the anode materials of Examples 1 to 6 had the highest effective peak at a diffraction angle (2θ) of 26° to 30° at the (111) plane in the X-ray diffraction (XRD) spectrum, in which the diffraction angle (2θ) of 26° to 30° corresponds to the (111) plane.

Further, the peak intensity of silicon was further enhanced when the nano-silicon particles were formed with the medium coating layer and the first and second coating layers.

On the other hand, for the nano-silicon particles, it is desirable to have a smaller grain size in order to allow reversible physical expansion and contraction thereof upon intercalation and deintercalation of lithium ions (a smaller grain size of the silicon particles results in a greater half-width of the main peak in the Si [111] orientation in the 2θ data of XRD and a smaller grain size calculated according to the Scherrer equation for K=9). However, a smaller grain size of the silicon particles can cause increase in oxidation rate of silicon through increase in grinding time of a silicon material. Therefore, it is important to control the oxidation rate of the nano-silicon particles through determination of the size of the silicon particles and production of the silicon particles having a suitable grain size.

That is, according to the present invention, the average particle diameter (d50) of the nano-silicon particles is set to satisfy the oxidation rate of a silicon anode. In this case, expansion/contraction of the nano-silicon particles becomes reversible. Accordingly, it is possible to secure stable electrochemical characteristics in evaluation of lithium ion secondary batteries using the anode materials of Examples.

The nano-silicon particles may have an FWHM value of the X-ray diffraction angle (2θ) of 0.40° to 0.80°, preferably 0.52° to 0.68°, or 0.59° to 0.71°, at the (111) plane in X-ray diffraction analysis using CuKα-rays.

When the FWHM value of the nano-silicon particles satisfies the above range after sintering, fracture of the silicon particles can be significantly reduced upon charging/discharging by sufficiently suppressing new exposed surfaces of the nano-silicon particles. However, the anode materials of Examples allowed efficient charging/discharging, thereby significantly improving lifespan of the silicon anodes. Further, it can be seen that a high capacity silicon anode, that is, an anode material for lithium ion secondary batteries, can be produced using the nano-silicon particles such that capacity of a silicon/carbon composite exceeds the range of 1,300 mAh/g to 1,400 mAh/g.

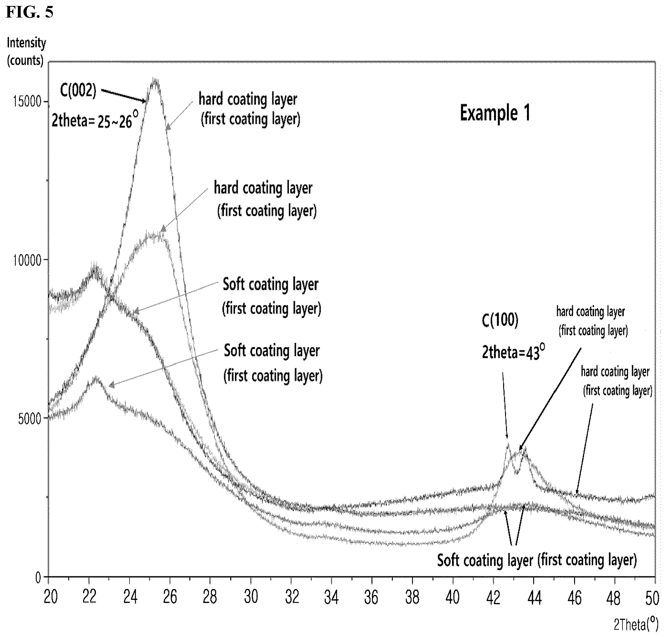

(2) Anode material XRD peak analysis: Among the anode materials of Examples and Comparative Example, the first coating layer (hard coating layer and soft coating layer) of the anode material of Example 1 were analyzed based on XRD peaks. FIG. 5 shows an analysis result.

FIG. 5 is a graph depicting an XRD analysis result of the first hard coating layer of the anode material of Example 1. Referring to FIG. 5, in the XRD graph, the hard coating layer of Example 1 had a primary peak at 2θ = 25~26° at the C(002) plane, whereas the soft coating layer of Example 1 had a primary peak near at 2θ = 23° substantially indicating graphite. Accordingly, it could be seen that the hard coating layer had better crystallinity than the soft coating layer.

Referring again to FIG. 5, the secondary peak appeared near at 2θ = 43° at the C(100) plane and the hard coating layer had higher crystallinity than the soft coating layer in the first coating layer. Accordingly, it could be seen that the hard coating layer with high crystallinity had higher hardness, higher rigidity, and better electrical conductivity of carbon than the soft coating layer.

### (3) Electrochemical evaluation (1)

(3-1) Preparation of lithium ion battery (half-coin type cell): CR2032 half-coin cells were prepared using the anode materials of Examples and Comparative Example. Specifically, a mixture was prepared by mixing 96.99 wt% of the anode material of each of Examples and Comparative Example, 0.11 wt% of a conductive material (Oscial, Tuball, graphene carbon nanotube), 1.65 wt% of CMC (carboxy methyl cellulose), and 1.25 wt% of styrene butadiene rubber (SBR). Next, an anode slurry having a capacity of about 450 mAh/g was prepared by mixing 10.1 wt% of the prepared mixture with 89.9 wt% of commercially available natural graphite having a capacity of 364 mAh/g. Then, an anode was prepared by coating the prepared slurry onto one surface of an anode collector, followed by drying and pressing. The anode had a loading quantity of 6.5±0.5m g/cm² and an electrode density of 1.60 g/cc to 1.65 g/cc.

A CR2032 half-coin cell was prepared using a lithium cathode (thickness: 300 µm, MTI), an electrolyte, and a separator (including polypropylene and polyethylene) by a typical method. The electrolyte was prepared by dissolving 1M LiPF₆ in a solvent mixture of ethyl methyl carbonate (EMC) and ethylene carbonate (EC) (EMC:EC = 5:5 in volume ratio), followed by adding vinylene carbonate (VC) and fluoroethylene carbonate (FEC) to the solvent mixture (94.5 wt% of the solvent mixture, 0.5 wt% of vinylene carbonate and 5 wt% of fluoroethylene carbonate).

(3-2) Evaluation of charge/discharge characteristics: The half-coin cells prepared in (3-1) were subjected to aging at room temperature (25°C) for 20 hours, followed by electrochemical evaluation. For the anode materials, a reference capacity was set to 450 mAh/g and a measurement temperature was set to 45°C. A single cycle of a precharging process was performed in the operation voltage range of 0.005V to 1.5V, in which the charge/discharge current was 0.1C for one cycle. Then, after two cycles at a capacity of 0.2C, 50 cycles of lifespan evaluation were performed by applying a current of 0.5C upon charging/discharging at 0.2C in two cycles. Here, charge cut-off current was set to 0.005C and discharge cut-off voltage was set to 1.0V.

Lifespan (%) of the secondary batteries was evaluated through electrochemical evaluation of capacity (mAh/g) of the anodes of Examples and Comparative Example, and capacity (mAh/g), charge/discharge efficiency (%), and capacity retention rate of anode plates. Table 2 shows evaluation results.

(3-3) Evaluation of expansion characteristics: An expansion rate of the anode material upon charging/discharging was evaluated with respect to each of the half-coin cells of Examples and Comparative Example prepared in (3-1). Evaluation of the expansion rate was performed with reference to an initial anode thickness of the half-coin cell. The half-coin cell was charged with a current of 0.5C after 50 cycles of charging/discharging at a current of 0.5C. Next, the thickness of the anode and the thickness increase rate with reference to the initial anode thickness were measured. Table 2 shows a measurement result.

The thickness of the anode was measured using a measuring device (micrometer) after completion of the cycles, followed by dissembling the half-coin cell and completely removing foreign matter including a salt therefrom using a solvent (DMC).

**[Table 2]**

| Item | Capacity (mAh/g) | Capacity of anode plate (mAh/g) | Charge/disch arge efficiency (%) | Lifespan (%) @50cycle | Expansion rate (%) @50cycle |
|---|---|---|---|---|---|
| Example 1 | 1521 | 445 | 90.2 | 92.5 | 39.5 |
| Example 2 | 1496 | 449 | 90.1 | 92.1 | 39.6 |
| Example 3 | 1491 | 453 | 90.4 | 92.6 | 39.2 |
| Example 4 | 1556 | 480 | 91.1 | 93.1 | 37.9 |
| Example 5 | 1525 | 489 | 91.2 | 94.5 | 37.4 |
| Example 6 | 1557 | 497 | 92.6 | 94.2 | 37.5 |
| Comparative Example 1 | 1420 | 434 | 85.6 | 76.3 | 57.8 |

Referring to Table 2, it could be seen that the anode materials of Examples 1 to 6 had better properties in terms of charge/discharge efficiency and long lifespan than Comparative Example 1. In addition, it could be seen that the anode materials of Examples 1 to 6 had a lower volume change rate upon charging/discharging than Comparative Example 1, thereby preventing cracking and fracture upon intercalation/deintercalation of lithium ions and securing long lifespan through minimization in capacity reduction.

### (4) Electrochemical evaluation (2)

(4-1) Preparation of lithium ion battery (1.0 Ah pouch type full cell): Pouch type full cells were prepared using the anode materials of Examples and Comparative Example. Specifically, a mixture was prepared by mixing 96.99 wt% of the anode material of each of Examples and Comparative Example, 0.11 wt% of a conductive material (Oscial, Tuball, graphene carbon nanotube), 1.65 wt% of CMC (carboxy methyl cellulose), and 1.25 wt% of styrene butadiene rubbers (SBR). Next, an anode slurry having a capacity of about 550 mAh/g was prepared by mixing 10.1 wt% of the prepared mixture with 89.9 wt% of commercially available natural graphite having a capacity of 364 mAh/g. Then, an anode was prepared by coating the prepared slurry onto one surface of an anode collector plate, followed by drying and pressing. The anode had a loading quantity of 6.5±0.5 m g/cm² and an electrode density of 1.55 g/cc to 1.60 g/cc.

Next, pouch cells having a capacity of 1.0 Ah were prepared using a cathode (NCM811), an electrolyte, and a separator (including polypropylene and polyethylene) by a typical method.

The electrolyte was prepared by dissolving 1M LiPF₆ in a solvent mixture of ethyl methyl carbonate (EMC) and ethylene carbonate (EC) (EMC:EC = 5:5 in volume ratio), followed by adding vinylene carbonate (VC) and fluoroethylene carbonate (FEC) to the solvent mixture (96.5 wt% of the solvent mixture, 0.5 wt% of vinylene carbonate and 3 wt% of fluoroethylene carbonate).

(4-2) Evaluation of charge/discharge characteristics: The full cells prepared in (4-1) were subjected to aging at room temperature (25°C) for 20 hours, followed by electrochemical evaluation at room temperature. Specifically, for each of the full cells prepared in Examples and Comparative Example, a single cycle of a precharging process of 0.1C charge/0.1C discharge was performed in the operation voltage range of 2.75V to 4.25V. In one cycle, the charge current was set to 0.1C and the cut-off current was set to 0.005C. Then, after two cycles with reference to a standard process of 0.2C charge, 0.01C cut-off/0.1C discharge, 300 cycles of lifespan evaluation (capacity retention rate) were performed under conditions of 1.0C/4.25V cutoff by applying a charge current of 0.5C/0.02C cut-off upon charging with reference to 0.2C discharge capacity in two cycles. Table 3 shows evaluation results.

**[Table 3]**

| Item | One cycle charge/discharge efficiency (0.1C/0.1C) | Capacity retention rate @300cycle |
|---|---|---|
| Example 1 | 85.9 | 94.3 |
| Example 2 | 85.8 | 94.1 |
| Example 3 | 85.9 | 94.4 |
| Example 4 | 86.2 | 94.9 |
| Example 5 | 86.5 | 95.1 |
| Example 6 | 86.4 | 95.4 |
| Comparative Example 1 | 85.3 | 19.6 |

From the result of Table 3, it could be seen that the full cells of Examples 1 to 6 had better properties in terms of charge/discharge efficiency and long lifespan characteristics than that of Comparative Example 1.

(4-3) Impedance evaluation: AC impedance spectrum of each of the full cells of Examples and Comparative Example prepared in (4-1) was measured.

Typical internal reactions in lithium ion batteries include passivation, charge transfer and diffusion reactions. These reactions have different time constants and appear in different frequency regions of an impedance spectrum.

Passivation refers to formation of a passivation layer by reduction of the cathode and the electrolyte in the lithium ion battery and is represented by a parallel connection of a resistor and a capacitor, and a small semicircle appears in a high frequency region of the impedance spectrum.

In addition, a large semicircle appearing in the impedance spectrum denotes a charge transfer phenomenon and is represented by a parallel connection of charge transfer resistance (Rct) and double layer capacitance (Cdl). The large semicircle represents electron transfer reaction across an interface between two electrodes (cathode and anode) and the electrolyte.

In order to obtain AC impedance spectrum of the full cells (1.0Ah) of Examples and Comparative Example, BPS 1000FL was used. Impedance measurement was performed at a frequency of 10 mHz to 1 kHz. Curve fitting using an equivalent circuit including an Rct and Cdl parallel circuit was performed using Zview.

Impedance of each of the full cells (1.0Ah) of Examples and Comparative Example was measured with reference to a capacity in the range of 3.0 V to 4.2 V and 100% SOC (state of charge) after operation of 10 cycles to secure stability of the cells, and measurement results are shown in Table 4.

**[Table 4]**

| Item | Rct (mohm) (@SOC 50%) |
|---|---|
| Example 1 | 37.9 |
| Example 2 | 38.9 |
| Example 3 | 38.5 |
| Example 4 | 39.4 |
| Example 5 | 36.4 |
| Example 6 | 35.6 |
| Comparative Example 1 | 54.6 |

From Table 4, it could be seen that the anode materials of Examples 1 to 6 had lower charge transfer resistance (Rct) than the anode material of Comparative Example 1.

(5) Evaluation of expansion characteristics of single-electrode plate: An expansion rate upon charging/discharging was evaluated with respect to the anode materials of Examples and Comparative Example. Specifically, cathode plates were fabricated using NCM622 and anode plates were fabricated using the anode materials prepared in Examples 1 to 6 and Comparative Example 1 under conditions of current density of 3.2 mA/cm² and rolling density of 1.55 g/cc. Then, single-electrode plate cells with an anode and a cathode facing each other were fabricated using these plates.

Next, the single-electrode plate cell was subjected to a precharging process and a standard process by 0.1C/0.1C charge/discharge once and 0.25C/0.25C charge/discharge once. Thereafter, 50 cycles of charge/discharge were performed by repeating a cycle of charging at 0.5C and 2.6V cutoff and discharging at 0.5C and 4.2V cutoff.

Next, for the single-electrode plate cells of Examples 1 to 6 and Comparative Example 1, an initial thickness of the anode and thicknesses of the anode after 1 cycle, 30 cycles and 50 cycles were measured and thickness change ratios after 1 cycle, 30 cycles and 50 cycles were measured with reference to the initial anode thickness. In addition, charge/discharge efficiency (%) of each of the single-electrode plate cells upon operation of 1 cycle was measured and Table 5 shows measurement results.

**[Table 5]**

| Item | 1 cycle charge/discharge efficiency (%) (0.1C/0.1C) | Thickness change ratio after 1 cycle | Thickness change ratio after 30 cycles | Thickness change ratio after 50 cycles |
|---|---|---|---|---|
| Example 1 | 86.20% | 12.7% | 25.5% | 39.1% |
| Example 2 | 85.70% | 13.2% | 27.8% | 38.9% |
| Example 3 | 85.10% | 13.8% | 28.2% | 38.4% |
| Example 4 | 86.50% | 13.2% | 27.1% | 38.2% |
| Example 5 | 87.20% | 12.5% | 25.5% | 38.1% |
| Example 6 | 87.70% | 12.3% | 25.3% | 37.9% |
| Comparative Example 1 | 84.80% | 13.6% | 39.7% | 55.4% |

Referring to Table 5, it could be seen that Examples 1 to 6 had lower thickness (volume) change rates than Comparative Example 1 upon charge/discharge of the single-electrode plate cell.

Although the present invention has been described with reference to some example embodiments, it should be understood by those skilled in the art that these embodiments are given by way of illustration only, and that various modifications, variations and alterations can be made without departing from the spirit and scope of the invention. Therefore, the embodiments should not be construed as limiting the technical spirit of the present invention, but should be construed as illustrating the technical spirit of the present invention. The scope of the invention should be interpreted according to the following appended claims as covering all modifications or variations derived from the appended claims and equivalents thereto.

## Claims

1. An anode material comprising:
nano-silicon particles;
a medium coating layer formed on an outer circumferential surface of the nano-silicon particle; and
a first coating layer formed on an outer circumferential surface of the medium coating layer,
wherein the first coating layer comprises at least one of a hard coating layer and a soft coating layer,
the hard coating layer having a higher hardness than the medium coating layer,
the medium coating layer having a higher hardness than the soft coating layer.

2. The anode material according to claim 1, further comprising:
a silicon carbide (SiC) layer between the nano-silicon particle and the medium coating layer.

3. The anode material according to claim 1, wherein the nano-silicon particles have an effective peak at a diffraction angle (2θ) in the range of 26° to 30°, 47° to 50°, 53° to 58°, 68° to 72°, 74° to 78°, and/or 88° to 90° in an X-ray diffraction (XRD) spectrum.

4. The anode material according to claim 1, wherein the medium coating layer has a pencil hardness of 2H to 4H, the hard coating layer has a pencil hardness of greater than 4H to 6H, and the soft coating layer has a pencil hardness of B to less than 2H, as measured in accordance with ISO 15184.

5. The anode material according to claim 1, wherein the medium coating layer has a thickness of 3 nm to 30 nm and a density of greater than 1.5 g/cm³ to 1.8 g/cm³; the hard coating layer has a thickness of 5 nm to 1,000 nm and a density of greater than 1.8 g/cm³ to 2.8 g/cm³; and the soft coating layer has a thickness of 5 nm to 500 nm and a density of 1.5 g/cm³ or less.

6. The anode material according to claim 1, wherein the anode material has an average particle diameter (d50) of 50 nm to 3 µm; the nano-silicon particles have an average particle diameter (d50) of 45 nm to 1,500 nm; and the first coating layer has a thickness of 2 nm to 1,500 nm.

7. The anode material according to claim 1, further comprising:
a second coating layer formed on an outer circumferential surface of the first coating layer, the second coating layer comprising a medium coating layer.

8. The anode material according to claim 1, wherein the medium coating layer and the first coating layer are present in a weight ratio of 1:0.5 to 1:6.

9. A method of preparing an anode material, comprising:
preparing primary dried powder by drying a nano-silicon slurry;
preparing a first intermediate material by heat treatment of the primary dried powder using hydrocarbon gas;
preparing a mixed slurry comprising the first intermediate material, a first coating material and a solvent;
preparing secondary dried powder by drying the mixed slurry; and
preparing a second intermediate material by sintering the secondary dried powder,
wherein the first coating material comprises at least one of a hard coating material and a soft coating material;
the second intermediate material comprises nano-silicon particles, a medium coating layer formed on an outer circumferential surface of the nano-silicon particle, and a first coating layer formed on an outer circumferential surface of the medium coating layer; and
the first coating layer comprises at least one of a hard coating layer and a soft coating layer,
the hard coating layer having a higher hardness than the medium coating layer,
the medium coating layer having a higher hardness than the soft coating layer.

10. The method according to claim 9, wherein the step of preparing a first intermediate material comprises:
raising an inner temperature of a chamber receiving the primary dried powder therein to 850°C to 970°C while decreasing an inner pressure of the chamber to less than atmospheric pressure;
introducing hydrocarbon gas into the decompressed chamber so as to contact the primary dried powder; and
performing heat treatment by gradually raising the inner pressure of the chamber while maintaining the raised temperature of the chamber.

11. The method according to claim 10, wherein the step of preparing a first intermediate material comprises:
preparing a first composition comprising the primary dried powder and graphite;
placing the first composition in a chamber, followed by raising the inner temperature of the chamber to 900°C to 1,100°C while decreasing the inner pressure of the chamber to less than atmospheric pressure;
introducing hydrocarbon gas and a buffer gas into the decompressed chamber so as to contact the first composition; and
performing heat treatment by gradually raising the inner pressure of the chamber while maintaining the raised temperature.

12. The method according to claim 11, wherein the second intermediate material further comprises a silicon carbide (SiC) layer between the nano-silicon particle and the medium coating layer.

13. The method according to claim 9, wherein the step of preparing a second intermediate material comprises:
subjecting the secondary dried powder to primary sintering at 850°C to 1,050°C; and
subjecting a first mixture comprising the secondary dried powder subjected to primary sintering and a second coating material to secondary sintering at 850°C to 1,050°C,
wherein the second coating material comprises at least one of a hard coating material and a soft coating material.

14. The method according to claim 9, further comprising:
forming a second coating layer on an outer circumferential surface of the second intermediate material after preparation of the second intermediate material,
wherein the second coating layer comprises a medium coating layer and is formed by heat treatment of the second intermediate material in a hydrocarbon gas atmosphere.

15. A secondary battery comprising:
a cathode;
an anode; and
an electrolyte disposed between the cathode and the anode,
wherein the anode comprises the anode material according to claim 1.
